# EUROPEAN PATENT APPLICATION

(11) **EP 4 254 644 A1**
(43) Date of publication of application: **04.10.2023**
(21) Application number: 22860454.2
(22) Date of filing: 22.08.2022
(51) Int. Cl.: H01M 50/553, H01M 50/536

(54) **BATTERY CELL, BATTERY, AND ELECTRICAL APPARATUS**

(30) Priority: 23.08.2021 WO PCT/CN2021/114156
(71) Applicant: Contemporary Amperex Technology Co., Limited, Ningde, Fujian 352100 (CN)
(72) Inventor: CHAI, Zhisheng, Ningde, Fujian 352100 (CN); JIN, Haizu, Ningde, Fujian 352100 (CN); GUO, Zhijun, Ningde, Fujian 352100 (CN); GU, Hui, Ningde, Fujian 352100 (CN)
(74) Representative: Herrmann, Uwe
(86) International application number: PCT/CN2022/114037
(87) International publication number: WO 2023/025108

(57) **Abstract**

Embodiments of this application provide a battery cell, a battery, and an electric apparatus. The battery cell includes an electrode assembly, a housing, an electrode terminal, and a current collecting member. The electrode assembly includes a first tab. The housing is configured to accommodate the electrode assembly. The electrode terminal is disposed in the housing, and the electrode terminal includes a first concave portion and a connecting portion at the bottom of the first concave portion. The current collecting member is connected to the first tab and welded to the connecting portion. The first concave portion is provided on the electrode terminal to reduce thickness of the connecting portion, thereby reducing welding power required for welding the connecting portion and the current collecting member, reducing heat generated, reducing the risk of other components being burned, and enhancing safety.

## Description

### CROSS-REFERENCE TO RELATED APPLICATIONS

This application claims priority to International Patent Application No. PCT/CN2021/114156, filed on August 23, 2021 and entitled "BATTERY CELL, MANUFACTURING METHOD THEREOF, AND MANUFACTURING SYSTEM THEREOF, BATTERY, AND ELECTRIC APPARATUS", which is incorporated herein by reference in its entirety.

### TECHNICAL FIELD

This application relates to the field of battery technologies, and more specifically, to a battery cell, a battery, and an electric apparatus.

### BACKGROUND

Battery cells are widely used in electronic devices such as mobile phones, laptops, battery carts, electric vehicles, electric aircrafts, electric ships, electric toy cars, electric toy ships, electric toy aircrafts, and electric tools. Battery cells may include nickel-cadmium battery cells, nickel-hydrogen battery cells, lithium-ion battery cells, secondary alkaline zinc-manganese battery cells, and the like.

In the development of battery technologies, how safety of battery cells is enhanced is a research direction in battery technologies.

### SUMMARY

This application provides a battery cell, a battery, and an electric apparatus to enhance safety of battery cells.

According to a first aspect, an embodiment of this application provides a battery cell. The battery cell includes an electrode assembly, a housing, an electrode terminal, and a current collecting member. The electrode assembly includes a first tab. The housing is configured to accommodate the electrode assembly. The electrode terminal is disposed in the housing, and the electrode terminal includes a first concave portion and a connecting portion at the bottom of the first concave portion. The current collecting member is connected to the first tab and welded to the connecting portion.

In the foregoing technical solution, the first concave portion is provided on the electrode terminal to reduce thickness of the connecting portion, thereby reducing welding power required for welding the connecting portion and the current collecting member, reducing heat generated, reducing the risk of other components being burned, and enhancing safety.

In some embodiments, the current collecting member is welded to the connecting portion to form a first welding portion, and in a thickness direction of the connecting portion, the first welding portion extends from a side of the connecting portion facing away from the current collecting member at least to the inside of the current collecting member.

In the foregoing technical solution, the first welding portion extends from the connecting portion to the inside of the current collecting member to connect the current collecting member and the connecting portion, reducing contact resistance between the current collecting member and the electrode terminal, and improving current capacity.

In some embodiments, in the thickness direction of the connecting portion, the first welding portion does not protrude beyond a surface of the current collecting member facing away from the connecting portion.

In the foregoing technical solution, the first welding portion is spaced a predetermined distance from the surface of the current collecting member facing away from the connecting portion, so as to prevent the current collecting member from being melted through, reduce the risk of metal particles being generated on the surface of the current collecting member facing away from the connecting portion, and enhance safety.

In some embodiments, the housing includes a cylinder and a cover connected to the cylinder. The cylinder is disposed around the periphery of the electrode assembly. The cover is provided with an electrode lead-out hole. The electrode terminal is mounted in the electrode lead-out hole. The first welding portion and the cover are both annular, outer diameter of the cover is D₀, inner diameter of the first welding portion is D₁, and D₁ and D₀ satisfy 0.1≤D₁/D₀≤0.6.

D₀ is positively correlated with diameter of the electrode assembly. The larger D₀ is, the higher the capacity of the electrode assembly is, and the higher the requirement of the battery cell for a current flow area of the first welding portion is. The smaller D₁ is, the smaller the perimeter of the first welding portion is, and the smaller the current flow area of the first welding portion is. Under the condition that D₁/D₀ is too small, D₁ is relatively small due to relatively large D₀. As a result, a current flow area of the first welding portion is insufficient, and the first welding portion generates a lot of heat during charge and discharge, which is difficult to meet requirements of the battery cell for the current capacity and temperature rise control during fast charge.

The larger D₁ is, the larger the dimension of the electrode lead-out hole is, and the smaller the area of the cover is. Likewise, the smaller D₀ is, the smaller the area of the cover is. Under the condition that D₁/D₀ is too large, D₁ is relatively large due to relatively small D₀. As a result, the cover easily deforms when the battery cell vibrates, causing potential safety hazards. The cover may be used as an output electrode of the battery cell to be connected to a busbar. Under the condition that D₁/D₀ is too large, a connection area between the cover and the busbar is relatively small, a current flow area between the cover and the busbar is insufficient, and heat generated at joint between the cover and the busbar is relatively high, which is difficult to meet requirements of the battery cell for the current capacity and temperature rise control during fast charge.

In the foregoing technical solution, 0.1≤D₁/D₀≤0.6 is controlled to meet the requirements of the battery cell for the current capacity and temperature rise control, enhancing safety of the battery cell.

In some embodiments, the first welding portion is a non-closed structure, and a central angle α of the first welding portion ranges from 180° to 330°.

α is positively correlated with the current flow area of the first welding portion. The smaller α is, the smaller the current flow area of the first welding portion is, and the higher the heat generated when current flows through the first welding portion is. In the foregoing technical solution, α is defined in the range of 180° to 330°, so that the first welding portion meets the requirements of the battery cell for the current capacity and temperature rise control. The first welding portion is a non-closed structure, and an unwelded region between two ends of the first welding portion in a circumferential direction can release welding stress and reduce stress concentration.

In some embodiments, the first welding portion is a closed structure, so as to increase a welding area and improve welding strength and current capacity of the first welding portion.

In some embodiments, 0.2≤D₁/D₀≤0.4.

In some embodiments, D₁ ranges from 5 mm to 14 mm, so as to meet the requirements of the battery cell for the current capacity and temperature rise control.

In some embodiments, the cover and the cylinder are integrally formed. In this way, the connecting process of the cover and the cylinder can be left out. When the cover and the cylinder are electrically connected to a positive electrode or a negative electrode of the electrode assembly, it is precisely because of the joint between the cover and the cylinder being an integrated structure, resistance at the joint between the cover and the cylinder is small, thereby improving the current capacity. The cover may be configured to be connected to an external component (for example, the busbar). When the battery cell is subjected to external impact, the external component may pull the cover, so that the joint between the cover and the cylinder is subjected to the action of force. In the foregoing technical solution, the cover and the cylinder are integrated so as to enhance strength of the joint between the cover and the cylinder and reduce the risk of failure in the joint between the cover and the cylinder.

In some embodiments, in the thickness direction of the connecting portion, dimension of the first welding portion is h, thickness of a region of the connecting portion for welding with the current collecting member is d₀, and d₀ and h satisfy 1<h/d₀≤1.5.

Under the condition that h/d₀≤1, welding penetration of the first welding portion is low. Because the first welding portion is integrally formed on the connecting portion, a rosin joint is generated, and the first welding portion is difficult to effectively connect the current collecting member and the connecting portion. When d₀ is constant, the greater h is, the greater the power required for welding is, and the higher the heat generated during welding is. Under the condition that h is too large, high temperature generated during welding easily damages members around the electrode terminal, causing potential safety hazards.

In the foregoing technical solution, 1<h/d₀≤1.5 is controlled so as to reduce the heat generated during welding and reduce welding difficulty under the premise of ensuring the joint between the current collecting member and the connecting portion.

In some embodiments, thickness of a region of the current collecting member for welding with the connecting portion is di, and d₀ and d₁ satisfy 0.5<d₁/d₀≤1.2.

When d₀ is constant, the smaller d₁ is, the easier the current collecting member is melted through during welding, and the easier the high-temperature particles generated during welding fall into the battery cell; and the larger d₁ is, the larger the space occupied by the current collecting member is, the greater the weight is, and the lower the energy density of the battery cell is.

In the foregoing technical solution, 0.5<d₁/d₀≤1.2 is controlled so as to reduce the risk of the current collecting member being melted through and reduce loss of the energy density of the battery cell.

In some embodiments, d₀ ranges from 0.4 mm to 1.2 mm so as to meet the requirements of the battery cell for the current capacity and temperature rise control, reducing the heat generated during welding and enhancing safety.

In some embodiments, at least part of the first tab is located on a side of the current collecting member facing away from the electrode terminal and supports the current collecting member.

In the foregoing technical solution, the first tab can support the current collecting member, so that the current collecting member is fitted to the connecting portion. When the battery cell vibrates, the first tab can limit the movement of the current collecting member with respect to the connecting portion, thereby decreasing the stress on the first welding portion and reducing the risk of tearing of the first welding portion. During welding of the connecting portion and the current collecting member, the first tab can support the current collecting member, thereby reducing the relative displacement between the current collecting member and the connecting portion during welding and reducing the risk of rosin joint.

In some embodiments, a first portion of the first tab is located on a side of the connecting portion facing away from the first concave portion, and is configured to support part of the current collecting member that is opposite the connecting portion.

In the foregoing technical solution, the first portion can support the part of the current collecting member that is opposite the connecting portion, so that the current collecting member and the connecting portion are closely fitted to reduce the risk of rosin joint. During welding, the first portion can also constrain deformation of the current collecting member and improve the morphology of the current collecting member.

In some embodiments, the first portion is welded to the current collecting member to form a second welding portion.

In the foregoing technical solution, the second welding portion can reduce the contact resistance between the current collecting member and the first tab, improving the current capacity. The second welding portion is close to the connecting portion, which can reduce the conductive path between the connecting portion and the second welding portion, thereby reducing the resistance and improving the current capacity.

In some embodiments, a second portion of the first tab encloses the periphery of the first portion, and is configured to support a region of the current collecting member that is not opposite the connecting portion.

In the foregoing technical solution, with the second portion disposed, an area of the region of the first tab that supports the current collecting member can be increased, the supporting effect of the first tab is enhanced, a pressure between the first tab and the current collecting member is lowered, and the risk of the first tab being crushed is reduced.

In some embodiments, the second portion is welded to the current collecting member to form a third welding portion.

In the foregoing technical solution, the third welding portion can reduce the contact resistance between the current collecting member and the second portion, improving the current capacity.

In some embodiments, the current collecting member has a convex portion on a side facing the first tab, and the convex portion is welded to the second portion to form the third welding portion.

In the foregoing technical solution, the convex portion can be better fitted to the second portion, reducing the risk of poor welding.

In some embodiments, the first tab is disposed around the central axis of the electrode assembly, and a cross section of the first tab perpendicular to the central axis is annular. Outer radius of the first tab is R, minimum distance from the third welding portion to the central axis in the radial direction of the first tab is D₂, and R and D₂ satisfy 0.2≤D₂/R≤0.8.

R is positively correlated with diameter of the electrode assembly. The larger R is, the larger the current generated by the electrode assembly is, and the higher the requirement of the battery cell for the current flow area is. Part of the current collecting member close to the central axis may be used for welding with the connecting portion; and the smaller D₂ is, the smaller the region of the current collecting member that can be welded to the connecting portion is, and the smaller the current flow area between the current collecting member and the connecting portion is. Under the condition that D₂/R is too small, R is relatively large due to relatively small D₂. As a result, a current flow area between the current collecting member and the connecting portion is insufficient, and a lot of heat is generated at the weld between the current collecting member and the connecting portion during charge and discharge, which is difficult to meet requirements of the battery cell for the current capacity and temperature rise control during fast charge.

The first tab includes multiple tab layers. The larger D₂ is, the outer the tab layer directly connected to the third welding portion is. Under the condition that D₂ is too large, the number of tab layers connected to the third welding portion is relatively small, and distance between the third welding portion and the innermost tab layer is too large. As a result, a current path between the outermost tab layer and the electrode terminal differs greatly from that between the innermost tab layer and the electrode terminal, leading to uneven current density of the first electrode plate and an increase in internal resistance.

In the foregoing technical solution, D₂/R is controlled in a range of 0.2 to 0.8 so as to reduce the difference in the current paths between the portions of the first tab at different positions and the electrode terminal, improve the uniformity of the current density of the first electrode plate of the electrode assembly, and reduce the internal resistance to meet the requirements of the battery cell for the current capacity and temperature rise control.

In some embodiments, D₂ and R satisfy 0.2≤D₂/R≤0.5.

In some embodiments, D₂ ranges from 3.5 mm to 10 mm to reduce the internal resistance of the electrode assembly, so as to meet the requirements of the battery cell for the current capacity and temperature rise control.

In some embodiments, diameter of the current collecting member is D₃, diameter of the first tab is D₄, and D₃ is less than D₄.

In the foregoing technical solution, the current collecting member has a smaller diameter, which can save the space occupied by the current collecting member, reduce weight of the current collecting member, and increase the energy density of the battery cell.

In some embodiments, D₃ and D₄ satisfy 0.75≤D₃/D₄≤0.97.

When D₄ is constant, under the condition that D₃ is too small, the distance between the outer portion of the first tab and the current collecting member is too large, and the conductive path between the outer portion of the first tab and the current collecting member is too long, resulting in relatively large internal resistance of the electrode assembly, thereby affecting the performance of the battery cell. In the foregoing technical solution, D₃/D₄≥0.75 is controlled so as to reduce the internal resistance of the electrode assembly and improve the charge and discharge performance of the battery cell.

When D₄ is constant, under the condition that D₃ is too large, due to assembly errors, the coaxiality of the current collecting member and the electrode assembly fluctuates, causing the current collecting member to protrude from the outer peripheral surface of the electrode assembly, and making the current collecting member and the electrode assembly difficult to enter the housing, thereby affecting assembly efficiency and product excellence rate.

When D₄ is constant, under the condition that D₃ is too large, due to assembly errors, the coaxiality of the current collecting member and the electrode assembly fluctuates, causing the current collecting member to protrude from the outer peripheral surface of the electrode assembly, and making the current collecting member and the electrode assembly difficult to enter the housing, thereby affecting assembly efficiency and product excellence rate. In the foregoing technical solution, D₃/D₄≤0.97 is controlled so as to reduce the risk of the current collecting member protruding from the outer peripheral surface of the electrode assembly due to errors and improve assembly efficiency and product excellence rate.

In some embodiments, D₃ ranges from 35 mm to 44 mm. D₃ being controlled in the range of 35 mm to 44 mm can reduce the internal resistance of the electrode assembly, improve the charge and discharge performance of the battery cell, and reduce the risk of the current collecting member protruding from the outer peripheral surface of the electrode assembly due to errors.

In some embodiments, the connecting portion is provided with a groove recessed from a first outer surface of the connecting portion in a direction facing the electrode assembly, and the first welding portion extends from the bottom wall of the groove at least to the inside of the current collecting member.

During production of the battery cell, an external device needs to cooperate with the connecting portion. The surface of the first welding portion is uneven, and under the condition that the external device is pressed on the first welding portion, the external device is easily crushed by the first welding portion. In the foregoing technical solution, with the groove provided, a gap between the first outer surface and the bottom wall of the groove is formed, so that the first outer surface can be configured to support the external device to separate the external device from the first welding portion, reducing the risk of the external device being crushed.

In some embodiments, the housing includes a cylinder and a cover connected to the cylinder. The cylinder is disposed around the periphery of the electrode assembly. The cover is provided with an electrode lead-out hole. The electrode terminal is mounted in the electrode lead-out hole. The electrode terminal includes a terminal body, the terminal body includes a columnar portion, a first restraint member, and a second restraint member, at least part of the columnar portion is located in the electrode lead-out hole, the first concave portion is disposed in the columnar portion, the first restraint member and the second restraint member are both connected to and protrude from the outer lateral wall of the columnar portion, and the first restraint member and the second restraint member are disposed on the outside and inside of the cover respectively and together are configured to clamp part of the cover.

In the foregoing technical solution, the first restraint member and the second restraint member clamp the part of the cover from two sides, so as to fix the terminal body to the cover.

In some embodiments, the terminal body has a second outer surface, and the first concave portion is recessed from the second outer surface in the direction facing the electrode assembly to the first outer surface of the connecting portion.

In some embodiments, the electrode terminal further includes a sealing plate, where the sealing plate is connected to the terminal body and seals the opening of the first concave portion.

In the foregoing technical solution, the sealing plate can protect the connecting portion from the outside, reducing external impurities entering the first concave portion, reducing the risk of the connecting portion being damaged by external impurities, and improving the sealing performance of the battery cell.

In some embodiments, the electrode assembly further includes a second tab with a polarity opposite to that of the first tab, where the second tab is disposed around the central axis of the electrode assembly. The first tab is disposed at an end of the electrode assembly facing the electrode terminal, the second tab is disposed at an end of the electrode assembly facing away from the electrode terminal, and the second tab is electrically connected to the housing.

In the foregoing technical solution, the housing itself may be used as one output electrode of the battery cell, thereby eliminating a conventional electrode terminal and simplifying the structure of the battery cell. When a plurality of battery cells are assembled into a group, the housing may be electrically connected to the busbar. This not only can enlarge the current flow area, but also can make the structural design of the busbar more flexible.

In some embodiments, the second tab is a negative electrode tab, and the substrate material of the housing is steel. The steel housing is not easily corroded by the electrolyte in a low potential state.

In some embodiments, the housing has an opening at an end facing away from the electrode terminal, and the battery cell further includes a cover plate for sealing the opening.

According to a second aspect, an embodiment of this application provides a battery, including the battery cell according to any one of the embodiments of the first aspect.

According to a third aspect, an embodiment of this application provides an electric apparatus, including the battery according to the second aspect, where the battery is configured to supply electrical energy.

### BRIEF DESCRIPTION OF DRAWINGS

To describe the technical solutions in the embodiments of this application more clearly, the following briefly describes the accompanying drawings required for describing the embodiments of this application. Apparently, the accompanying drawings in the following descriptions show merely some embodiments of this application, and a person of ordinary skill in the art may still derive other drawings from the accompanying drawings without creative efforts.
FIG. 1 is a schematic structural diagram of a vehicle according to some embodiments of this application;
FIG. 2 is a schematic exploded view of a battery according to some embodiments of this application;
FIG. 3 is a schematic structural diagram of a battery module shown in FIG. 2;
FIG. 4 is a schematic exploded view of a battery cell according to some embodiments of this application;
FIG. 5 is a schematic cross-sectional view of a battery cell according to some embodiments of this application;
FIG. 6 is an enlarged partial schematic diagram of the battery cell shown in FIG. 5;
FIG. 7 is an enlarged schematic diagram at block B in FIG. 6;
FIG. 8 is an enlarged schematic diagram at circle C in FIG. 7;
FIG. 9 is a schematic diagram of a terminal body of an electrode terminal of a battery cell according to some embodiments of this application;
FIG. 10 is a schematic diagram of a terminal body of an electrode terminal of a battery cell according to some embodiments of this application;
FIG. 11 is a schematic structural diagram of an electrode assembly and a current collecting member of a battery cell according to some embodiments of this application;
FIG. 12 is a schematic structural diagram of an electrode assembly and a current collecting member of a battery cell according to some other embodiments of this application;
FIG. 13 is a partial schematic cross-sectional view of a battery cell according to some other embodiments of this application;
FIG. 14 is an enlarged schematic diagram at block E in FIG. 13;
FIG. 15 is a schematic exploded view of an electrode terminal of a battery cell according to some embodiments of this application;
FIG. 16 is a schematic top view of an electrode terminal of a battery cell according to some embodiments of this application;
FIG. 17 is a partial schematic cross-sectional view of a battery cell according to some other embodiments of this application;
FIG. 18 is a partial schematic cross-sectional view of a battery cell according to still some other embodiments of this application; and
FIG. 19 is a schematic cross-sectional view of a battery cell according to some other embodiments of this application.

In the accompanying drawings, the figures are not drawn to scale.

### DESCRIPTION OF EMBODIMENTS

To make the objectives, technical solutions, and advantages of the embodiments of this application clearer, the following clearly describes the technical solutions in the embodiments of this application with reference to the accompanying drawings in the embodiments of this application. Apparently, the embodiments described are some rather than all embodiments of this application. All other embodiments obtained by a person of ordinary skill in the art based on the embodiments of this application without creative efforts shall fall within the protection scope of this application.

Unless otherwise defined, all technical and scientific terms used in this application shall have the same meanings as commonly understood by those skilled in the art to which this application relates. The terms used in the specification of this application are intended to merely describe the specific embodiments rather than to limit this application. The terms "include", "comprise", and any variations thereof in the specification and claims of this application as well as the foregoing description of drawings are intended to cover non-exclusive inclusions. In the specification, claims, or accompanying drawings of this application, the terms "first", "second", and the like are intended to distinguish between different objects rather than to indicate a particular order or relative importance.

Reference to "embodiment" in this application means that specific features, structures, or characteristics described with reference to the embodiment may be included in at least one embodiment of this application. The word "embodiment" appearing in various places in the specification does not necessarily refer to the same embodiment or an independent or alternative embodiment that is exclusive of other embodiments.

In the description of this application, it should be noted that unless otherwise specified and defined explicitly, the terms "mount", "connect", "join", and "attach" should be understood in their general senses. For example, they may refer to a fixed connection, a detachable connection, or an integral connection, and may refer to a direct connection, an indirect connection via an intermediate medium, or an internal communication between two elements. A person of ordinary skills in the art can understand specific meanings of these terms in this application as appropriate to specific situations.

The term "and/or" in this application is only an associative relationship for describing associated objects, indicating that three relationships may be present. For example, A and/or B may indicate three cases: presence of only A; presence of both A and B; and presence of only B. In addition, the character "/" in this application generally indicates an "or" relationship between contextually associated objects.

In the embodiments of this application, the same reference signs denote the same members. For brevity, in different embodiments, detailed descriptions of the same members are not repeated. It should be understood that, as shown in the accompanying drawings, sizes such as thickness, length, and width of various members and sizes such as thickness, length, and width of integrated devices in the embodiments of this application are merely for illustrative purposes and should not constitute any limitations on this application.

In this application, "a plurality of" means more than two (inclusive).

The term "parallel" in this application not only includes the absolutely parallel case, but also includes the approximately parallel case in the conventional understanding of engineering; likewise, the term "perpendicular" not only includes the absolutely perpendicular case, but also includes the approximately perpendicular case in the conventional understanding of engineering.

The battery cell in the application may include a lithium-ion secondary battery cell, a lithium-ion primary battery cell, a lithium-sulfur battery cell, a sodium-lithium-ion battery cell, a sodium-ion battery cell, a magnesium-ion battery cell, or the like. This is not limited in the embodiments of this application.

The battery mentioned in the embodiments of this application is a single physical module that includes one or more battery cells for providing a higher voltage and capacity. For example, the battery mentioned in this application may include a battery module, a battery pack, or the like. A battery typically includes a box configured to enclose one or more battery cells. The box can prevent liquids or other foreign matter from affecting charging or discharging of the battery cell.

The battery cell includes an electrode assembly and an electrolyte. The electrode assembly includes a positive electrode plate, a negative electrode plate, and a separator. Working of the battery cell mainly relies on migration of metal ions between the positive electrode plate and the negative electrode plate. The positive electrode plate includes a positive electrode current collector and a positive electrode active material layer. The positive electrode active material layer is applied on a surface of the positive electrode current collector. The positive electrode current collector includes a positive electrode current collecting portion and a positive electrode tab. The positive electrode current collecting portion is coated with the positive electrode active material layer, and the positive electrode tab is coated with no positive electrode active material layer. With a lithium-ion battery as an example, its positive electrode current collector may be made of aluminum, and its positive electrode active material layer includes an positive electrode active substance which may be lithium cobaltate, lithium iron phosphate, ternary lithium, lithium manganate, or the like. The negative electrode plate includes a negative electrode current collector and a negative electrode active material layer. The negative electrode active material layer is applied on a surface of the negative electrode current collector. The negative electrode current collector includes a negative electrode current collecting portion and a negative electrode tab. The negative electrode current collecting portion is coated with the negative electrode active material layer, and the negative electrode tab is coated with no negative electrode active material layer. The negative electrode current collector may be made of copper, and the negative electrode active material layer includes a negative electrode active substance which may be carbon, silicon, or the like. A material of the separator may be PP (polypropylene, polypropylene), PE (polyethylene, polyethylene), or the like.

The battery cell further includes a housing for accommodating the electrode assembly and an electrode terminal disposed on the housing. The electrode terminal is configured to be electrically connected to the electrode assembly, so as to realize charge and discharge of the electrode assembly. In order to facilitate assembly and ensure the current capacity of the battery cell, the battery cell is generally connected to the tab and electrode terminal of the electrode assembly through a current collecting member.

In order to reduce the resistance and increase the current, the inventors generally connect the electrode terminal and the current collecting member by welding. The inventors noticed that if the current collecting member and the electrode terminal are welded first, and then the electrode terminal is mounted to the housing, metal particles generated during welding may be attached to the electrode terminal or the current collecting member, and fall into the inside of the housing during assembly. The metal particles falling into the inside of the housing may pierce the separator of the electrode assembly, causing a risk of short circuit.

In order to reduce the metal particles falling into the housing, the inventors tried to mount the electrode terminal on the housing first, and then weld the current collecting member and the electrode terminal from the outside of the electrode terminal. In this way, the housing can block the metal particles, reducing the metal particles entering the housing.

However, the inventors found during welding that when the electrode terminal and the current collecting member are welded from the outside of the electrode terminal, the electrode terminal needs to be melted through. The electrode terminal generally has a relatively large thickness, which results in high power required for welding and high heat generated during welding; and in turn the heat is conducted to other members, such as a sealing member and the electrode assembly, which may easily damage these members and cause potential safety hazards.

In view of this, the embodiments of this application provide a technical solution, by providing a concave portion on the electrode terminal to reduce thickness of portion of the electrode terminal for welding with the current collecting member, thereby reducing the difficulty of welding, reducing the heat generated during welding, and enhancing safety.

The technical solution described in the embodiments of this application is applicable to batteries and electric apparatuses using a battery.

The electric apparatus may be vehicles, mobile phones, portable devices, notebook computers, ships, spacecrafts, electric toys, electric tools, or the like. The vehicle may be a fossil fuel vehicle, a natural gas vehicle, or a new energy vehicle. The new energy vehicle may be a battery electric vehicle, a hybrid electric vehicle, a range-extended electric vehicle, or the like. The spacecraft includes an airplane, a rocket, a space shuttle, a spaceship, and the like. The electric toy includes a fixed or mobile electric toy, for example, a game console, an electric toy car, an electric toy ship, and an electric toy airplane. The electric tool includes an electric metal cutting tool, an electric grinding tool, an electric assembly tool, and an electric railway-specific tool, for example, an electric drill, an electric grinder, an electric wrench, an electric screwdriver, an electric hammer, an electric impact drill, a concrete vibrator, and an electric planer. The embodiments of this application impose no special limitation on the foregoing electric apparatus.

For ease of description, the electric apparatus being a vehicle is used as example for description of the following embodiments.

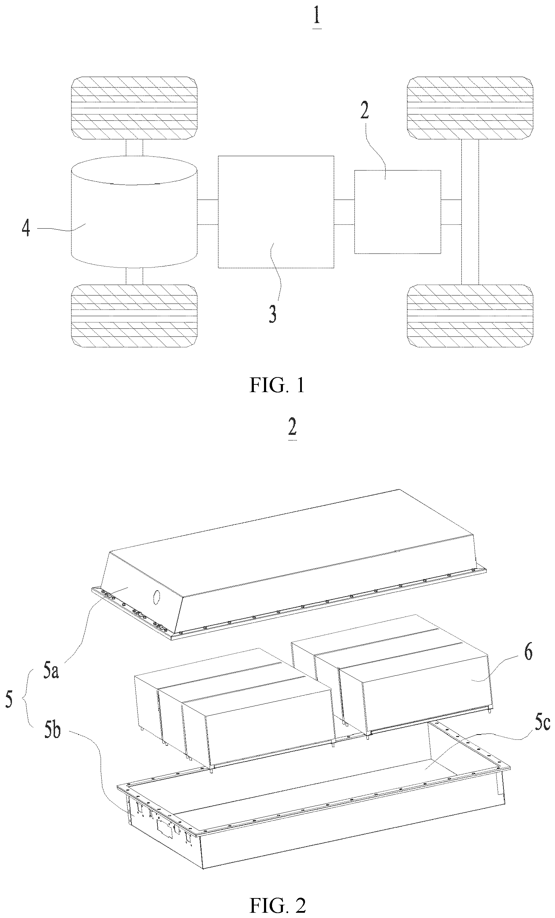

FIG. 1 is a schematic structural diagram of a vehicle according to some embodiments of this application. As shown in FIG. 1, the vehicle 1 is provided with a battery 2 inside, and the battery 2 may be disposed at the bottom or in the front or at the rear of the vehicle 1. The battery 2 may be configured to supply power to the vehicle 1. For example, the battery 2 may be used as an operational power source for the vehicle 1.

The vehicle 1 may further include a controller 3 and a motor 4, where the controller 3 is configured to control the battery 2 to supply power to the motor 4, for example, to satisfy power needs of start, navigation, and driving of the vehicle 1.

In some embodiments of this application, the battery 2 can be used as not only the operational power source for the vehicle 1 but also a driving power source for the vehicle 1, replacing or partially replacing fossil fuel or natural gas to provide driving traction for the vehicle 1.

FIG. 2 is a schematic exploded view of a battery according to some embodiments of this application. As shown in FIG. 2, the battery 2 includes a box 5 and a battery cell (not shown in FIG. 2), and the battery cell is accommodated in the box 5.

The box 5 is configured to accommodate the battery cell, and the box 5 may have various structures. In some embodiments, the box 5 may include a first box portion 5a and a second box portion 5b. The first box portion 5a and the second box portion 5b fit together to jointly define an accommodating space 5c for accommodating the battery cell. The second box portion 5b may be a hollow structure with an opening formed at an end, the first box portion 5a is a plate-shaped structure, and the first box portion 5a covers the opening side of the second box portion 5b so as to form the box 5 having the accommodating space 5c; and the first box body portion 5a and the second box portion 5b may alternatively both be a hollow structure with an opening formed at an end, and the opening side of the first box portion 5a is engaged with the opening side of the second box portion 5b so as to form the box 5 having the accommodating space 5c. Certainly, the first box portion 5a and the second box portion 5b may be in various shapes, such as cylinder and cuboid.

In order to improve the airtightness after the connection of the first box portion 5a and the second box portion 5b, a sealing element such as sealing gum and sealing ring may also be disposed between the first box portion 5a and the second box portion 5b.

Assuming that the first box portion 5a fits on a top of the second box portion 5b, the first box portion 5a may also be referred to as an upper cover, and the second box portion 5b may also be referred to as a lower box.

There may be one or more battery cells in the battery 2. Under the condition that a plurality of battery cells are provided, the plurality of battery cells may be connected in series, parallel, or series-parallel, where being connected in series-parallel means a combination of series and parallel connections of the plurality of battery cells. The plurality of battery cells may be directly connected in series, parallel, or series-parallel, and then an entirety of the plurality of battery cells is accommodated in the box 5; or certainly, the battery may be formed by a plurality of battery cells being connected in series, parallel, or series-parallel first to form a battery module 6 and then a plurality of battery modules 6 being connected in series, parallel, or series-parallel to form an entirety, which is accommodated in the box 5.

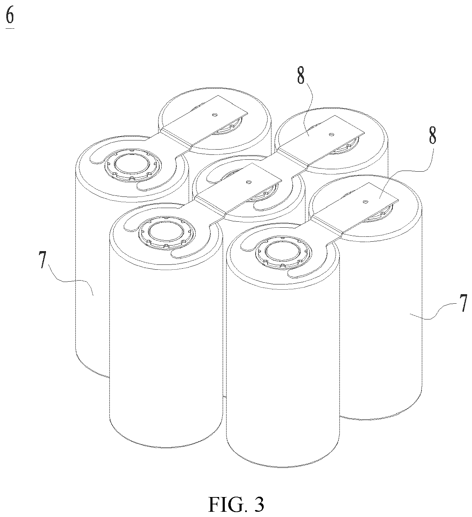

FIG. 3 is a schematic structural diagram of a battery module shown in FIG. 2.

In some embodiments, as shown in FIG. 3, there are a plurality of battery cells 7, and the plurality of battery cells 7 are connected in series, parallel, or series-parallel to form a battery module 6. A plurality of battery modules 6 are then connected in series, parallel, or series-parallel to form an entirety which is accommodated in the box.

The plurality of battery cells 7 in the battery module 6 may be electrically connected via a busbar 8, so that the plurality of battery cells 7 in the battery module 6 are connected in series, parallel, or series-parallel. There may be one or more busbars, and each busbar 8 is configured to electrically connect at least two battery cells.

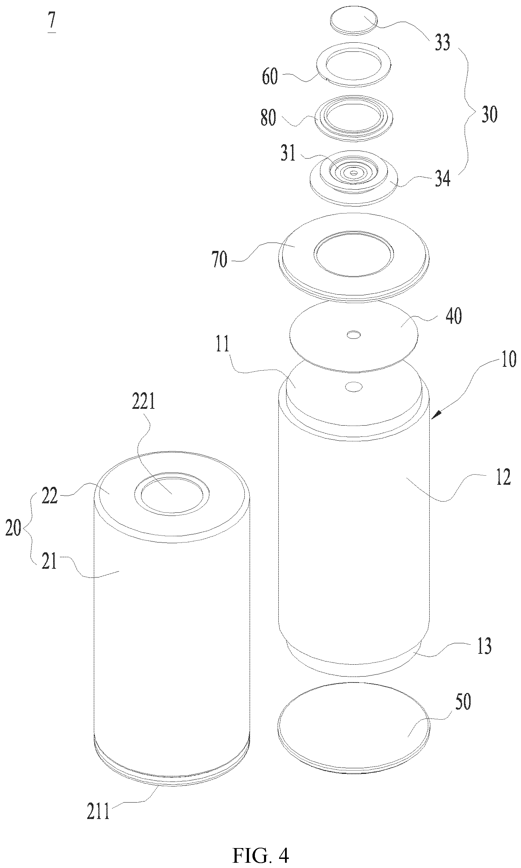

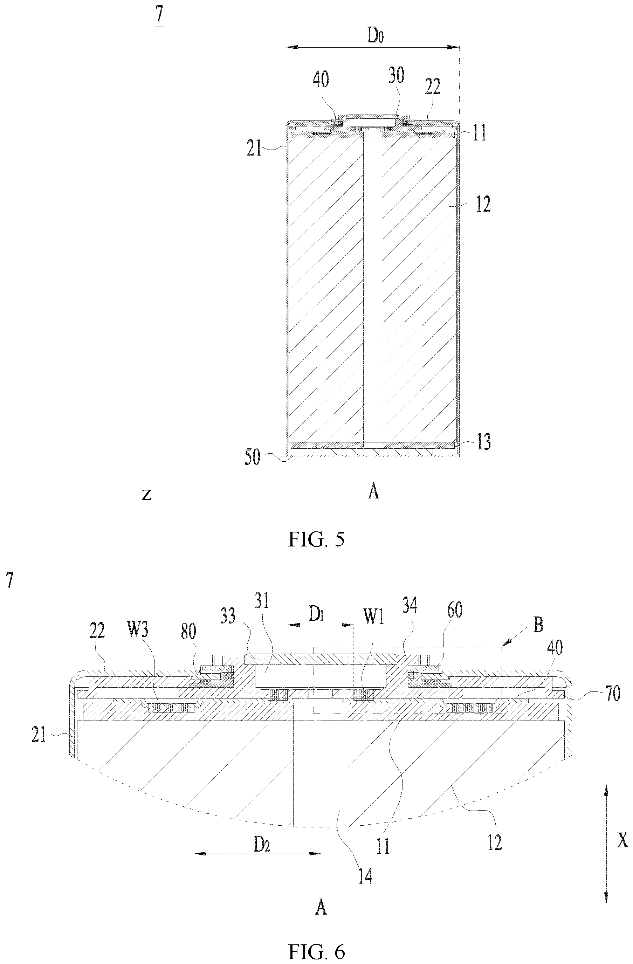

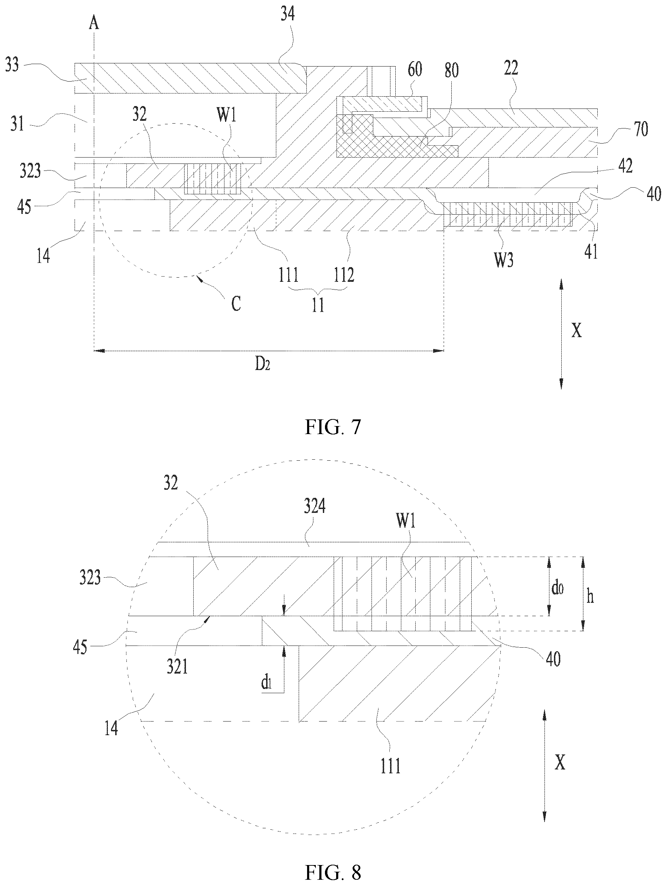

FIG. 4 is a schematic exploded view of a battery cell according to some embodiments of this application; FIG. 5 is a schematic cross-sectional view of a battery cell according to some embodiments of this application; FIG. 6 is an enlarged partial schematic diagram of the battery cell shown in FIG. 5; FIG. 7 is an enlarged schematic diagram at bock B in FIG. 6; and FIG. 8 is an enlarged schematic diagram at circle C in FIG. 7.

As shown in FIG. 4 to FIG. 8, the battery cell 7 in some embodiments of this application includes an electrode assembly 10, a housing 20, an electrode terminal 30, and a current collecting member 40. The electrode assembly 10 includes a first tab 11. The housing 20 is configured to accommodate the electrode assembly 10. The electrode terminal 30 is disposed in the housing 20, and the electrode terminal 30 includes a first concave portion 31 and a connecting portion 32 at the bottom of the first concave portion 31. The current collecting member 40 is connected to the first tab 11 and welded to the connecting portion 32.

The electrode assembly 10 includes a first electrode plate and a second electrode plate that have opposite polarities. One of the first electrode plate and the second electrode plate is a positive electrode plate, and the other is a negative electrode plate. For example, the electrode assembly 10 generates electrical energy through oxidation and reduction reactions during intercalation/deintercalation of ions in the positive electrode plate and the negative electrode plate. Optionally, the electrode assembly 10 further includes a separator, where the separator is configured to insulate the first electrode plate from the second electrode plate.

In some examples, the first electrode plate, the second electrode plate, and the separator are all strip structures, and the first electrode plate, the second electrode plate, and the separator are integrally wound around the central axis Ato form a winding structure. The winding structure may be a cylindrical structure, a flat structure, or in other shapes. In some other examples, the electrode assembly 10 may alternatively be a laminated structure formed by laminating the first electrode plate, the separator, and the second electrode plate.

The first tab 11 may be part of the first electrode plate coated with no active material layer. The first tab 11 may be a positive electrode tab or a negative electrode tab.

The housing 20 is a hollow structure, and has a space formed inside it for accommodating the electrode assembly 10. The housing 20 may be of various shapes and sizes, such as a cuboid shape, a cylindrical shape, and a hexagonal prism shape. A shape of the housing 20 may be determined according to a specific shape of the electrode assembly 10. For example, under the condition that the electrode assembly 10 is a cylindrical structure, a cylindrical housing may be selected; and under the condition that the electrode assembly 10 is a cuboid structure, a cuboid housing may be selected. Optionally, both the electrode assembly 10 and the housing 20 are cylindrical.

The housing 20 may be made of various materials, such as copper, iron, aluminum, stainless steel, and aluminum alloy, which are not particularly limited in the embodiments of this application.

The housing 20 may be positively charged, negatively charged, or uncharged.

The electrode terminal 30 may be used as an output electrode of the battery cell 7, which may electrically connect the battery cell 7 and an external circuit, so as to realize charge and discharge of the battery cell 7. Optionally, the electrode terminal 30 is configured to be connected to the busbar, so as to realize electrical connection between the battery cells 7.

The electrode terminal 30 may be disposed on the housing 20 in an insulating manner, or may be electrically connected to the housing 20. The embodiments of this application do not impose limitation thereon, provided that the positive electrode plate and the negative electrode plate are not connected.

The first concave portion 31 may be recessed from a side of the electrode terminal 30 facing away from the electrode assembly 10 in a direction facing the electrode assembly 10, or may be recessed from a side of the electrode terminal 30 facing the electrode assembly 10 in a direction facing away from the electrode assembly 10.

The connecting portion 32 is part of the electrode terminal 30 that corresponds to the bottom surface of the first concave portion 31.

The current collecting member 40 electrically connects the first tab 11 to the first electrode terminal 30. The embodiments of this application do not impose limitation on the connection method between the first tab 11 and the current collecting member 40. For example, the current collecting member 40 may be connected to the first tab 11 by welding, abutting, or bonding.

The current collecting member 40 and the connecting portion 32 are connected by welding. For example, the current collecting member 40 and the connecting portion 32 are connected by laser welding.

In this embodiment of this application, the first concave portion 31 is provided on the electrode terminal 30 to reduce thickness of the connecting portion 32, thereby reducing welding power required for welding the connecting portion 32 and the current collecting member 40, reducing heat generated, reducing the risk of other components being burned, and enhancing safety.

In some embodiments, the electrode assembly 10 includes a main body 12, a first tab 11, and a second tab 13, where the first tab 11 and the second tab 13 protrude from the main body 12. The first tab 11 is part of the first electrode plate coated with no active material layer, and the second tab 13 is part of the second electrode plate coated with no active material layer.

The first tab 11 and the second tab 13 may protrude from the same side of the main body 12, or may protrude from opposite sides respectively. For example, the first tab 11 is disposed at an end of the electrode assembly 10 facing the electrode terminal 30, and the second tab 13 is disposed at an end of the electrode assembly 10 facing away from the electrode terminal 30.

In some embodiments, the first tab 11 is wound in multiple turns around the central axis A of the electrode assembly 10, meaning that the first tab 11 includes multiple turns of tab layers. After the winding is completed, the first tab 11 is generally cylindrical, and there is a gap between two adjacent tab layers. In this embodiment of this application, the first tab 11 may be treated to reduce the gap between the tab layers, so as to facilitate the connection between the first tab 11 and the current collecting member 40. For example, in this embodiment of this application, the first tab 11 may be kneaded, so that end regions of the first tab 11 facing away from the main body 12 can be gathered together. A dense end surface is formed at the end of the first tab 11 facing away from the main body 12 by the kneading process, which reduces the gap between tab layers and facilitates the connection between the first tab 11 and the current collecting member 40. Alternatively, in this embodiment of this application, a conductive material may alternatively be filled between two adjacent tab layers, so as to reduce the gap between the tab layers.

In some embodiments, the second tab 13 is wound in multiple turns around the central axis A of the electrode assembly 10, meaning that the second tab 13 includes multiple turns of tab layers. For example, the second tab 13 has also been kneaded so as to reduce the gap between the tab layers of the second tab 13.

The central axis A of the electrode assembly 10 is a virtual straight line. The first electrode plate, the second electrode plate, and the separator can be wound on the basis of the central axis A.

In some embodiments, the housing 20 includes a cylinder 21 and a cover 22 connected to the cylinder 21. The cylinder 21 is disposed around the periphery of the electrode assembly 10. The cover 22 is provided with an electrode lead-out hole 221. The electrode terminal 30 is mounted in the electrode lead-out hole 221.

The cover 22 and the cylinder 21 may be integrally formed, meaning that the housing 20 is an integrally formed component. Certainly, the cover 22 and the cylinder 21 may alternatively be two components provided separately, and then connected together by welding, riveting, bonding, or the like.

The electrode lead-out hole 221 runs through the cover 22 so as to lead out the electric energy in the electrode assembly 10 to the outside of the housing 20.

The central axis A is a virtual straight line passing through the electrode lead-out hole 221. The central axis A of the electrode assembly 10 may or may not coincide with the axis of the electrode lead-out hole 221.

The electrode terminal 30 is configured to work with the electrode lead-out hole 221 to cover the electrode lead-out hole 221. The electrode terminal 30 may or may not extend into the electrode lead-out hole 221 The electrode terminal 30 is fastened to the cover 22. The electrode terminal 30 may be integrally fastened to the outside of the cover 22, or may extend into the inside of the housing 20 through the electrode lead-out hole 221.

In some embodiments, the cover 22 and the cylinder 21 are integrally formed. In this way, the connecting process of the cover 22 and the cylinder 21 can be left out.

When the cover 22 and the cylinder 21 are electrically connected to a positive electrode or a negative electrode of the electrode assembly 10, it is precisely because of the joint between the cover 22 and the cylinder 21 being an integrated structure, resistance at the joint between the cover 22 and the cylinder 21 is small, thereby improving the current capacity. The cover 22 may be configured to be connected to an external component (for example, the busbar). When the battery cell is subjected to external impact, the external component may pull the cover 22, so that the joint between the cover 22 and the cylinder 21 is subjected to the action of force. In the foregoing technical solution, the cover 22 and the cylinder 21 are integrated so as to enhance strength of the joint between the cover 22 and the cylinder 21 and reduce the risk of failure in the joint between the cover 22 and the cylinder 21.

In some embodiments, the housing 20 may be formed by a stretching process.

In some embodiments, the housing 20 has an opening 211 at an end facing away from the electrode terminal 30, and the battery cell 7 further includes a cover plate 50 for sealing the opening 211.

Specifically, the cylinder 21 has an opening at an end facing away from the cover 22, and the cover plate 50 covers the opening of the cylinder 21 to seal the opening of the cylinder 21. The cover plate 50 may be various structures, for example, the cover plate 50 is a plate structure.

In some embodiments, the cover plate 50 may be a circular cover plate, a rectangular cover plate, a square cover plate, a hexagonal cover plate, or other shaped cover plates.

In some embodiments, the cover plate 50 is welded to the cylinder 21.

In some embodiments, the cover 22 is circular, and the electrode assembly 10 is cylindrical; and the central axis A coincides with the axis of the electrode lead-out hole 221. In this embodiment, it is not required that the central axis A completely coincides with the axis of the electrode lead-out hole 221, and there may be a deviation between the two that is allowed by the process.

In this embodiment, the electrode lead-out hole 221 is generally opened in the middle of the cover 22, and correspondingly, the electrode terminal 30 is also mounted in the middle of the cover 22. When a plurality of battery cells 7 are assembled into a group, the requirement for positioning accuracy of the electrode terminal 30 can be reduced, so as to simplify the assembly process.

For example, the axis of the electrode lead-out hole 221 coincides with the axis of the cover 22, and the cover 22 is an annular structure disposed around the axis of the electrode lead-out hole 221.

For example, the axis of the electrode terminal 30 coincides with the axis of the electrode lead-out hole 221.

In some other embodiments, the cover 22 may alternatively be rectangular, and the electrode assembly 10 is flat. The electrode lead-out hole 221 may be disposed near an end of the cover 22 in a length direction of the electrode lead-out hole 221.

In some embodiments, the electrode assembly 10 further includes a second tab 13 with a polarity opposite to that of the first tab 11, where the second tab 13 is disposed around the central axis A of the electrode assembly 10. The first tab 11 is disposed at an end of the electrode assembly 10 facing the electrode terminal 30, the second tab 13 is disposed at an end of the electrode assembly 10 facing away from the electrode terminal 30, and the second tab 13 is electrically connected to the housing 20.

The housing 20 itself may be used as one output electrode of the battery cell 7, thereby eliminating a conventional electrode terminal and simplifying the structure of the battery cell 7. When a plurality of battery cells 7 are assembled into a group, the housing 20 may be electrically connected to the busbar. This not only can enlarge the current flow area, but also can make the structural design of the busbar more flexible.

In some embodiments, the second tab 13 is a negative electrode tab, and the substrate material of the housing 20 is steel. The housing 20 is electrically connected to the negative electrode tab, meaning that the housing 20 is in a low potential state. The steel housing 20 is not easily corroded by the electrolyte in a low potential state.

In some embodiments, the cylinder 21 is configured to connect the second tab 13 and the cover 22, so that the second tab 13 and the cover 22 are electrically connected.

The cylinder 21 may be electrically connected to the second tab 13 directly, or may be electrically connected to the second tab 13 through other components. For example, the second tab 13 is electrically connected to the cylinder 21 through the cover plate 50.

The cover 22 and the electrode terminal 30 have different polarities. In this case, one of the cover 22 and the electrode terminal 30 may be used as a positive output electrode of the battery cell 7, and the other may be used as a negative output electrode of the battery cell 7. In this embodiment, the positive output electrode and the negative output electrode are disposed on the same side of the battery cell 7, which can simplify the connection process between a plurality of battery cells 7.

The electrode lead-out hole 221 in this embodiment of this application is made after the housing 20 is stretched and formed.

The inventors have tried to roll the opening end of the cylinder so that the opening end of the cylinder is turned inward to form a flanging structure, and the flanging structure presses the cover plate to fasten the cover plate. The inventors mounted the electrode terminal on the cover plate, and used the flanging structure and the electrode terminal as the two output electrodes of the battery cell. However, the larger the dimension of the flanging structure is, the higher the risk of curling and wrinkling after forming is. Under the condition that the flanging structure curls and wrinkles, the surface of the flanging structure becomes uneven, and when the flanging structure is welded to an external busbar, there will be a problem of poor welding. Therefore, the dimension of the flanging structure is relatively limited, resulting in insufficient current capacity of the battery cell.

In this embodiment, the electrode lead-out hole 221 for mounting the electrode terminal 30 is formed on the cover 22 by a hole-opening process, so that the positive output electrode and the negative output electrode are disposed at the end of the battery cell 7 facing away from the opening of the cylinder 21; and the cover 22 is formed during forming of the housing 20. The flatness can be ensured even after the electrode lead-out hole 221 is opened, and the connection strength between the cover 22 and the busbar is ensured. In addition, the flatness of the cover 22 is not restricted by its own dimension, and therefore the cover 22 can have a larger dimension, thereby improving the current capacity of the battery cell 7.

In some embodiments, the current collecting member 40 is welded to the connecting portion 32 to form a first welding portion W1. In a thickness direction of the connecting portion 32, the first welding portion W1 extends from a side of the connecting portion 32 facing away from the current collecting member 40 at least to the inside of the current collecting member 40.

During welding, part of the connecting portion 32 and part of the current collecting member 40 are melted to form a molten pool, and the molten pool solidifies to form the first welding portion W1. For example, when the electrode assembly 10 and the current collecting member 40 are mounted in the housing 20, and the current collecting member 40 is pressed against the connecting portion 32, an external welding device can weld the connecting portion 32 and the current collecting member 40 on the side of the connecting portion 32 facing away from the current collecting member 40 to form the first welding portion W1. The first welding portion W1 is exposed on a surface of the connecting portion 32 facing away from the current collecting member 40.

The embodiments of this application impose no special limitation on the shape, position, depth, and quantity of the first welding portion W1. For example, the first welding portion W1 may be rectilinear, C-shaped, annular, spiral, V-shaped, or in other shapes. The first welding portion W1 may be provided in one, or may be provided in plurality.

The first welding portion W1 may run through the current collecting member 40. For example, the first welding portion W1 runs through the current collecting member 40 and the connecting portion 32, and the first welding portion W1 is exposed on the surface of the current collecting member 40 facing away from the connecting portion 32. Certainly, the first welding portion W1 may not run through the current collecting member 40, meaning that the first welding portion W1 is not exposed on the surface of the current collecting member 40 facing away from the connecting portion 32.

The first welding portion W1 extends from the connecting portion 32 to the inside of the current collecting member 40 to connect the current collecting member 40 and the connecting portion 32, reducing contact resistance between the current collecting member 40 and the electrode terminal 30, and improving the current capacity.

In some embodiments, in the thickness direction X of the connecting portion 32, the first welding portion W1 does not protrude beyond a surface of the current collecting member 40 facing away from the connecting portion 32.

In the foregoing technical solution, the first welding portion W1 is spaced a predetermined distance from the surface of the current collecting member 40 facing away from the connecting portion 32, so as to prevent the current collecting member 40 from being melted through, reduce the risk of metal particles being generated on the surface of the current collecting member 40 facing away from the connecting portion 32, and enhance safety.

In some embodiments, the housing 20 includes a cylinder 21 and a cover 22 connected to the cylinder 21. The cylinder 21 is disposed around the periphery of the electrode assembly 10. The cover 22 is provided with an electrode lead-out hole 221. The electrode terminal 30 is mounted in the electrode lead-out hole 221. The first welding portion W1 and the cover 22 are both annular, outer diameter of the cover 22 is D₀, and inner diameter of the first welding portion W1 is D₁. D₁ and D₀ satisfy 0.1≤D₁/D₀≤0.6.

The first welding portion W1 may be a closed structure or a non-closed structure. In other words, the first welding portion W1 may be semi annular ring or full annular.

D₀ is positively correlated with diameter of the electrode assembly 10. The larger D₀ is, the higher the capacity of the electrode assembly 10 is, and the higher the requirement of the battery cell 7 for a current flow area of the first welding portion W1 is. The smaller D₁ is, the smaller the perimeter of the first welding portion W1 is, and the smaller the current flow area of the first welding portion W1 is. Under the condition that D₁/D₀ is too small, D₁ is relatively small due to relatively large D₀. As a result, a current flow area of the first welding portion W1 is insufficient, and the first welding portion W1 generates a lot of heat during charge and discharge, which is difficult to meet requirements of the battery cell 7 for the current capacity and temperature rise control during fast charge. The inventors found through intensive study and numerous experiments that when D₁/D₀≥0.1, the requirements of the battery cell 7 for the current capacity and temperature rise control can be satisfied.

The larger D₁ is, the larger the dimension of the electrode lead-out hole 221 is, and the smaller the area of the cover 22 is. Likewise, the smaller D₀ is, the smaller the area of the cover 22 is. Under the condition that D₁/D₀ is too large, D₁ is relatively large due to relatively small D₀. As a result, the cover 22 easily deforms when the battery cell 7 vibrates, causing potential safety hazards. The cover 22 may be used as an output electrode of the battery cell 7 to be connected to a busbar. Under the condition that D₁/D₀ is too large, a connection area between the cover 22 and the busbar is relatively small, a current flow area between the cover 22 and the busbar is insufficient, and heat generated at joint between the cover 22 and the busbar is relatively high, which is difficult to meet requirements of the battery cell 7 for the current capacity and temperature rise control during fast charge. The inventors found through intensive study and numerous experiments that when D₁/D₀≤0.6, the requirements of the battery cell 7 for the current capacity and temperature rise control can be satisfied, and the safety of the battery cell 7 can be enhanced.

D₁/D₀ may be 0.1, 0.2, 0.3, 0.4, 0.5, or 0.6.

In some embodiments, the inventors found through intensive study and numerous experiments that when 0.2≤D₁/D₀≤0.4, the requirements of the battery cell 7 for the current capacity and temperature rise control can be better satisfied, and the safety of the battery cell 7 can be enhanced.

In some embodiments, D₁ ranges from 5 mm to 14 mm.

Under the condition that D₁ is too small, a current flow area of the first welding portion W1 is insufficient, and the first welding portion W1 generates a lot of heat during charge and discharge, which is difficult to meet requirements of the battery cell 7 for the current capacity and temperature rise control during fast charge. Under the condition that D₁ is too large, a current flow area between the cover 22 and the busbar is insufficient, and heat generated at joint between the cover 22 and the busbar is relatively high. The inventors found through intensive study and numerous experiments that when D₁ is defined in a range of 5 mm to 14 mm, the requirements of the battery cell 7 for the current capacity and temperature rise control can be satisfied.

Optionally, D₁ is 5 mm, 7 mm, 9 mm, 10 mm, 12 mm, or 14 mm.

In some embodiments, in the thickness direction X of the connecting portion 32, dimension of the first welding portion W1 is h, and thickness of a region of the connecting portion 32 for welding with the current collecting member 40 is d₀, and d₀ and h satisfy 1<h/d₀≤1.5.

The first welding portion W1 is annular, and due to process errors, different regions of the first welding portion W1 may have different welding penetrations in the thickness direction X. h may be a dimension of a region of the first welding portion W1 with the lowest welding penetration in the thickness direction X.

In some examples, the connecting portion 32 is a flat-plate structure with uniform thickness, any part of the connecting portion 32 may be used for welding with the current collecting member 40, and d₀ is the thickness of the connecting portion 32. In some other examples, the connecting portion 32 is a structure with uneven thickness, and a region of the connecting portion 32 with smaller thickness may be a region of the connecting portion 32 for welding with the current collecting member 40, which can reduce the power required for welding and reduce heat generated. For example, a groove may be opened on the connecting portion 32 to reduce local thickness, and a region of the connecting portion 32 that corresponds to the groove may be used as a region of the connecting portion 32 for welding with the current collecting member 40.

Under the condition that h/d₀≤1, welding penetration of the first welding portion W1 is low. Because the first welding portion W1 is integrally formed on the connecting portion 32, a rosin joint is generated, and the first welding portion W1 is difficult to effectively connect the current collecting member 40 and the connecting portion 32. When d₀ is constant, the greater h is, the greater the power required for welding is, and the higher the heat generated during welding is. Under the condition that h is too large, high temperature generated during welding easily damages members around the electrode terminal 30, causing potential safety hazards.

The inventors found through intensive study and numerous experiments that when 1<h/d₀≤1.5, the heat generated during welding and welding difficulty can be reduced under the premise of ensuring the joint between the current collecting member 40 and the connecting portion 32.

Optionally, h/d₀ is 1.05, 1.1, 1.2, 1.3, 1.4, or 1.5.

In some embodiments, thickness of a region of the current collecting member 40 for welding with the connecting portion 32 is di, and d₀ and d₁ satisfy 0.5≤d₁/d₀≤1.2.

The region of the current collecting member 40 for welding with the connecting portion 32 is a region of the current collecting member 40 that abuts against the connecting portion 32.

When d₀ is constant, the smaller d₁ is, the easier the current collecting member 40 is melted through during welding, and the easier the high-temperature particles generated during welding fall into the battery cell 7; and the larger d₁ is, the larger the space occupied by the current collecting member 40 is, the greater the weight is, and the lower the energy density of the battery cell 7 is.

The inventors found through intensive study and numerous experiments that when 0.5≤d₁/d₀≤1.2, the risk of the current collecting member 40 being melted through and loss of the energy density of the battery cell 7 can be reduced.

Optionally, d₁/d₀ is 0.5, 0.7, 0.9, 1.0, or 1.2.

In some embodiments, D₀ ranges from 0.4 mm to 1.2 mm.

The smaller d₀ is, the lower the current capacity of the connecting portion 32 is. Under the condition that d₀ is too small, the connecting portion 32 may be difficult to meet the requirements of the battery cell 7 for the current capacity and temperature rise control during fast charge. The larger d₀ is, the greater the power required for welding is, and the higher the heat generated during welding is. Under the condition that d₀ is too large, high temperature generated during welding easily damages members around the electrode terminal 30, causing potential safety hazards.

The inventors found through intensive study and numerous experiments that when d₀ is defined in a range of 0.4 mm to 1.2 mm, the requirements of the battery cell 7 for the current capacity and temperature rise control can be satisfied, and the heat generated during welding can be reduced, enhancing safety.

Optionally, d₀ is 0.4 mm, 0.5 mm, 0.6 mm, 0.8 mm, 1.0 mm, or 1.2 mm.

Optionally, the inventors found through intensive study and numerous experiments that when d₀ is defined in a range of 0.6 mm to 1.0 mm, the requirements of the battery cell 7 for the current capacity and temperature rise control can be better satisfied, and the heat generated during welding can be reduced, enhancing safety.

In some embodiments, d₁ ranges from 0.2 mm to 0.6 mm. Optionally, d₁ ranges from 0.3 mm to 0.5 mm.

In some embodiments, at least part of the first tab 11 is located on a side of the current collecting member 40 facing away from the electrode terminal 30 and supports the current collecting member 40.

The first tab 11 can support the current collecting member 40 so that the current collecting member 40 is fitted to the connecting portion 32. When the battery cell 7 vibrates, the first tab 11 can limit the movement of the current collecting member 40 with respect to the connecting portion 32, thereby decreasing the stress on the first welding portion W1 and reducing the risk of tearing of the first welding portion W1.

During assembly of the battery cell 7, the current collecting member 40 can be supported by the first tab 11, so that the current collecting member 40 is closely fitted to the connecting portion 32, and the relative displacement between the current collecting member 40 and the connecting portion 32 during welding is reduced, reducing the risk of rosin joint.

In some embodiments, a first portion 111 of the first tab 11 is located on a side of the connecting portion 32 facing away from the first concave portion 31, and is configured to support part of the current collecting member 40 that is opposite the connecting portion 32.

In the thickness direction X of the connecting portion 32, the first portion 111 is disposed opposite the connecting portion 32. In other words, the first portion 111 is part of the first tab 11 that overlaps with the connecting portion 32 in the thickness direction X.

The first portion 111 can support the part of the current collecting member 40 that is opposite the connecting portion 32, so that the current collecting member 40 is closely fitted to the connecting portion 32, reducing the risk of rosin joint. During welding, the first portion 111 can also constrain deformation of the current collecting member 40 and improve the morphology of the current collecting member 40.

In some embodiments, a second portion 112 of the first tab 11 encloses the periphery of the first portion 111, and is configured to support a region of the current collecting member 40 that is not opposite the connecting portion 32.

The second portion 112 is part of the first tab 11 that does not overlap with the connecting portion 32 in the thickness direction X. For example, the second portion 112 is an annular structure.

With the second portion 112 disposed, an area of the region of the first tab 11 that supports the current collecting member 40 can be increased, the supporting effect of the first tab 11 is enhanced, a pressure between the first tab 11 and the current collecting member 40 is lowered, and the risk of the first tab 11 being crushed is reduced. During welding of the connecting portion 32 and the current collecting member 40, the second portion 112 can support the current collecting member 40, thereby reducing the relative displacement between the current collecting member 40 and the connecting portion 32 during welding and reducing the risk of rosin joint.

In some embodiments, in the thickness direction X of the connecting portion 32, the first tab 11 may not be integrally opposite the connecting portion 32. In other words, the first tab 11 may include only the second portion 112.

In some embodiments, the second portion 112 is welded to the current collecting member 40 to form a third welding portion W3.

During assembly of the battery cell 7, the second portion 112 of the first tab 11 of the electrode assembly 10 may be welded to the current collecting member 40 first, and then the electrode assembly 10 and the current collecting member 40 are put into the housing 20. Specifically, during welding of the second portion 112 and the current collecting member 40, the current collecting member 40 may be pressed against the flattened end surface of the first tab 11 first, and an external welding device then emits laser on a surface of the current collecting member 40 facing away from the first tab 11. The current collecting member 40 and the second portion 112 of the first tab 11 are welded through the laser.

The shape of the third welding portion W3 may be rectilinear, C-shaped, annular, spiral, V-shaped, or in other shapes, which is not limited in the embodiments. The third welding portion W3 may be provided in one, or may be provided in plurality.

The third welding portion W3 can reduce the contact resistance between the current collecting member 40 and the second portion 112, improving the current capacity.

In some embodiments, the current collecting member 40 has a convex portion 41 on a side facing the first tab 11, and the convex portion 41 is welded to the second portion 112 to form the third welding portion W3.

During assembly of the current collecting member 40 and the electrode assembly 10, the convex portion 41 of the current collecting member 40 is pressed against the second portion 112 first, and then the convex portion 41 and the second portion 112 are welded. The convex portion 41 can be better fitted to the second portion 112, reducing the risk of poor welding.

In some embodiments, the convex portion 41 may be pressed against the second portion 112 and be embedded into the second portion 112.

In some embodiments, except for the convex portion 41, other portions of the current collecting member 40 are generally flat-plate structures.

In some embodiments, the current collecting member 40 forms a second concave portion 42 at a position corresponding to the convex portion 41, where the second concave portion 42 is recessed with respect to the surface of the current collecting member 40 facing away from the first tab 11 in the direction facing the first tab 11. A transition portion is formed between a bottom surface of the second concave portion 42 and a top surface of the convex portion 41, and the transition portion is welded to the second portion 112 to form the third welding portion W3. The second concave portion 42 may be provided to reduce thickness of the transition portion, so as to reduce the welding power required for welding the transition portion and the second portion 112, reduce heat generated, and reduce the risk of the electrode assembly 10 being burned.

The third welding portion W3 is formed by welding, where the surface thereof is uneven. In this embodiment, the second concave portion 42 is provided to make the surface of the third welding portion W3 be recessed with respect to the surface of the current collecting member 40 facing away from the first tab 11, so as to insulate the third welding portion W3 from other components (for example, the electrode terminal 30).

In some embodiments, a fixing plate (not shown) may be provided in the second concave portion 42, and the fixing plate is configured to cover the third welding portion W3 to fix the residual metal particles on the third welding portion W3, reducing the risk of short circuit caused by metal particles falling into the electrode assembly 10. The fixing plate may be an insulating patch, an insulating glue layer, or other structures.

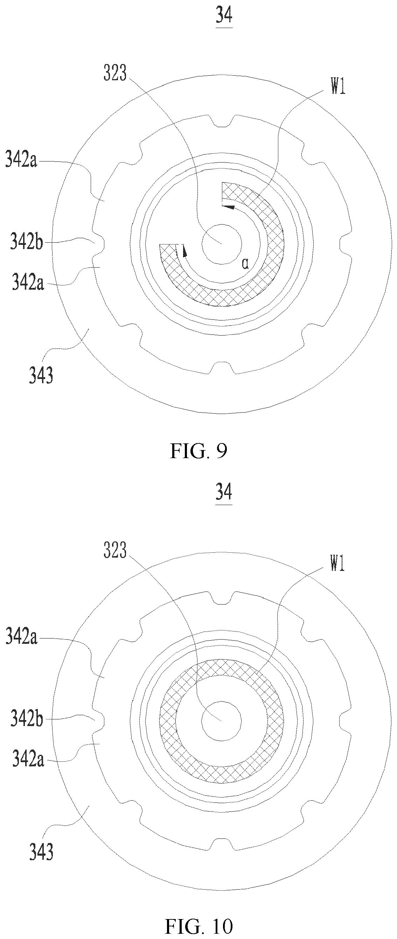

FIG. 9 is a schematic diagram of a terminal body of an electrode terminal of a battery cell according to some embodiments of this application.

As shown in FIG. 9, in some embodiments, the first welding portion W1 is a non-closed structure, and a central angle α of the first welding portion W1 ranges from 180° to 330°.

α is positively correlated with the current flow area of the first welding portion W1. The smaller α is, the smaller the current flow area of the first welding portion W1 is, and the higher the heat generated when current flows through the first welding portion W1 is. In this embodiment of this application, α is defined in the range of 180° to 330°, so that the first welding portion meets the requirements of the battery cell for the current capacity and temperature rise control.

The first welding portion W1 is a non-closed structure, and an unwelded region between two ends of the first welding portion W1 in a circumferential direction can release welding stress and reduce stress concentration.

FIG. 10 is a schematic diagram of a terminal body of an electrode terminal of a battery cell according to some embodiments of this application.

As shown in FIG. 10, in some embodiments, the first welding portion W1 is a closed structure. In other words, the central angle of the first welding portion W1 is 360°. Based on this embodiment of this application, the welding area is increased, and the welding strength and current capacity of the first welding portion are improved.

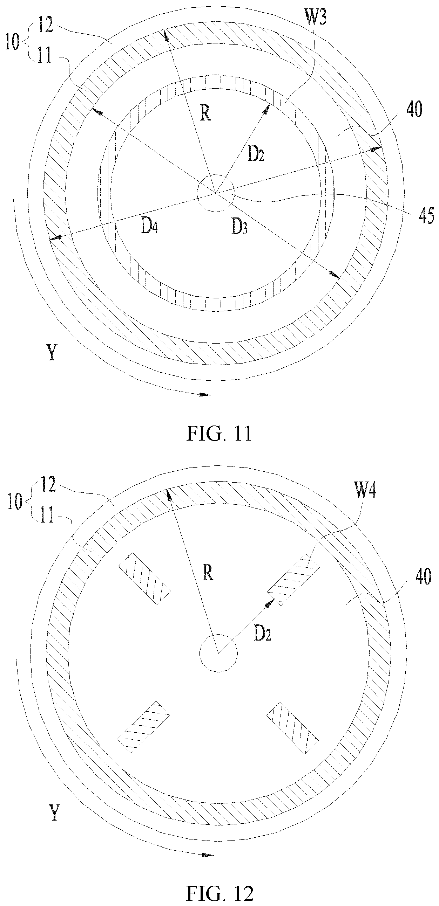

FIG. 11 is a schematic structural diagram of an electrode assembly and a current collecting member of a battery cell according to some embodiments of this application.

Refer to FIG. 6 to FIG. 11 together. In some embodiments, the first tab 11 is disposed around the central axis A of the electrode assembly 10, and a cross section of the first tab 11 perpendicular to the central axis is annular. Outer radius of the first tab 11 is R, minimum distance from the third welding portion W3 to the central axis A in the radial direction of the first tab 11 is D₂, and R and D₂ satisfy 0.2≤D₂/R≤0.8.

The cross section of the first tab 11 perpendicular to the central axis A is not required to be an absolute annular shape, allowing a deviation.

R is positively correlated with diameter of the electrode assembly 10. The larger R is, the larger the current generated by the electrode assembly 10 is, and the higher the requirement of the battery cell 7 for the current flow area is. Part of the current collecting member 40 close to the central axis A may be used for welding with the connecting portion 32; and the smaller D₂ is, the smaller the region of the current collecting member 40 that can be welded to the connecting portion 32 is, and the smaller the current flow area between the current collecting member 40 and the connecting portion 32 is. Under the condition that D₂/R is too small, R is relatively large due to relatively small D₂. As a result, a current flow area between the current collecting member 40 and the connecting portion 32 is insufficient, and a lot of heat is generated at the weld between the current collecting member 40 and the connecting portion 32 during charge and discharge, which is difficult to meet requirements of the battery cell 7 for the current capacity and temperature rise control during fast charge.

The first tab 11 includes a plurality of tab layers, and each tab layer goes around the central axis A. In the radial direction of the first tab 11, the plurality of tab layers are stacked in the radial direction of the first tab 11. The current on a tab layer directly connected to the third welding portion W3 may be directly conducted to the current collecting member 40 through the third welding portion W3; while the current on a tab layer not connected to the third welding portion W3 needs to be conducted to a tab layer directly connected to the third welding portion W3, and then can be conducted to the current collecting member 40 through the third welding portion W3. This causes a difference in conductive paths between the plurality of tab layers and a first wall. Under the condition that the difference is too large, the polarization problem is prone to be caused.

Under the condition that D₂/R is too large, distance between the third welding portion W3 and the outermost tab layer is too large. As a result, a current path between the outermost tab layer and the electrode terminal 30 differs greatly from that between the innermost tab layer and the electrode terminal 30, leading to uneven current density of the first electrode plate of the electrode assembly 10 and an increase in internal resistance.

The inventors found through intensive study and numerous experiments that when D₂/R≥0.2, the requirements of the battery cell 7 for the current capacity and temperature rise control can be satisfied.

The larger D₂ is, the outer the tab layer directly connected to the third welding portion W3 is. Under the condition that D₂ is too large, the number of tab layers connected to the third welding portion W3 is relatively small, and distance between the third welding portion W3 and the innermost tab layer is too large. As a result, a current path between the outermost tab layer and the electrode terminal 30 differs greatly from that between the innermost tab layer and the electrode terminal 30, leading to uneven current density of the first electrode plate and an increase in internal resistance.

The inventors found through intensive study and numerous experiments that when D₂/R≤0.8, the difference in the current paths between the portions of the first tab 11 at different positions and the electrode terminal 30 is reduced, the uniformity of the current density of the first electrode plate of the electrode assembly 10 is improved, the internal resistance is reduced, and the current capacity is improved.

Optionally, D₂/R is 0.2, 0.3, 0.5, 0.7, or 0.8.

In some embodiments, the inventors found through intensive study and numerous experiments that when D₂ and R satisfy 0.2≤D₂/R≤0.5, the current capacity the battery cell 7 can be better improved, and the temperature rise of the battery cell is decreased.

In some embodiments, D₂ ranges from 3.5 mm to 10 mm.

Under the condition that D₂ is too small, a current flow area between the current collecting member 40 and the connecting portion 32 is insufficient, and a lot of heat is generated at the weld between the current collecting member 40 and the connecting portion 32 during charge and discharge, which is difficult to meet requirements of the battery cell 7 for current capacity and temperature rise control during fast charge. The inventors found through intensive study and numerous experiments that when D₂≥3.5 mm, the requirements of the battery cell 7 for the current capacity and temperature rise control can be satisfied.

Under the condition D₂ is too large, the number of tab layers connected by the third welding portion W3 is relatively small, and the distance between a tab layer close to the central axis A and the third welding portion W3 is too large, resulting in relatively large internal resistance of the electrode assembly 10, and affecting the performance of the battery cell 7. The inventors found through intensive study and numerous experiments that when D₂≤10 mm, the internal resistance of the electrode assembly 10 can be reduced, and the charge and discharge performance of the battery cell 7 can be improved.

Optionally, D₂ is 3.5 mm, 4 mm, 5 mm, 7 mm, 8.5 mm, or 10 mm.

In some embodiments, R ranges from 20 mm to 22.8 mm.

In some embodiments, the third welding portion W3 is annular. The annular third welding portion W3 has a larger current flow area, which can improve the uniformity of the current density of the first electrode plate, reduce the internal resistance, and improve the current capacity.

In some embodiments, diameter of the current collecting member 40 is D₃, diameter of the first tab 11 is D₄, and D₃ is less than D₄.

D₃ refers to the diameter of an outer edge of the current collecting member 40, that is, the outer diameter of the current collecting member 40. D₄ refers to the diameter of the outer edge of the first tab 11, that is, the outer diameter of the first tab 11. For example, D₄=2×R.

The current collecting member 40 has a smaller diameter, which can save the space occupied by the current collecting member 40, reduce weight of the current collecting member 40, and increase the energy density of the battery cell 7.

In some embodiments, D₃ and D₄ satisfy 0.75≤D₃/D₄≤0.97.

When D₄ is constant, under the condition that D₃ is too small, the distance between the outer portion of the first tab 11 and the current collecting member 40 is too large, and the conductive path between the outer portion of the first tab 11 and the current collecting member 40 is too long, resulting in relatively large internal resistance of the electrode assembly 10, thereby affecting the performance of the battery cell 7. The inventors found through intensive study and numerous experiments that when D₃/D₄≥0.75, the internal resistance of the electrode assembly 10 can be reduced, and the charge and discharge performance of the battery cell 7 can be improved.

When D₄ is constant, under the condition that D₃ is too large, due to assembly errors, the coaxiality of the current collecting member 40 and the electrode assembly 10 fluctuates, causing the current collecting member 40 to protrude from the outer peripheral surface of the electrode assembly 10, and making the current collecting member 40 and the electrode assembly 10 difficult to enter the housing, thereby affecting assembly efficiency and product excellence rate. The inventors found through intensive study and numerous experiments that when D₃/D₄≤0.97, the risk of the current collecting member 40 protruding from the outer peripheral surface of the electrode assembly 10 due to errors can be reduced, and the assembly efficiency and product excellence rate can be improved.

Optionally, D₃/D₄ may be 0.75, 0.8, 0.85, 0.9, 0.95, or 0.97.

In some embodiments, D₃ ranges from 35 mm to 44 mm. The inventors found through intensive study and numerous experiments that when D₃ is defined in the range of 35 mm to 44 mm, the internal resistance of the electrode assembly 10 can be reduced, the charge and discharge performance of the battery cell 7 can be improved, and the risk of the current collecting member 40 protruding from the outer peripheral surface of the electrode assembly 10 due to errors can be reduced.

Optionally, D₃ may be 35 mm, 38 mm, 40 mm, 41 mm, 43 mm, or 44 mm.

In some embodiments, the inventors found through intensive study and numerous experiments that when D₃ is defined in the range of 38 mm to 41 mm, the internal resistance of the electrode assembly 10 can be further reduced, and the charge and discharge performance of the battery cell 7 can be improved.

In some embodiments, the connecting portion 32 is provided with a groove 324 recessed from a first outer surface 322 of the connecting portion 32 in a direction facing the electrode assembly 10, and the first welding portion W1 extends from the bottom wall of the groove 324 at least to the inside of the current collecting member 40.

The connecting portion 32 has the first outer surface 322 and a first inner surface 321 that are oppositely disposed in the thickness direction X of the connecting portion 32, the first inner surface 321 faces the current collecting member 40, and the first outer surface 322 faces away from the current collecting member 40. Optionally, the first outer surface 322 and the first inner surface 321 are both flat.

The groove 324 is recessed with respect to the first outer surface 322 in a direction facing the current collecting member 40. In this embodiment, the groove 324 is opened on the connecting portion 32 to form a stepped structure on the connecting portion 32. The first outer surface 322 and the bottom wall of the groove 324 have a gap formed.

The portion between the bottom wall of the groove 324 and the first inner surface 321 may be a region of the connecting portion 32 for welding with the current collecting member 40. In other words, the portion between the bottom wall of the groove 324 and the first inner surface 321 is used for welding to the current collecting member 40 to form the first welding portion W1.

During production of the battery cell 7, an external device needs to cooperate with the connecting portion 32. The surface of the first welding portion W1 is uneven, and under the condition that the external device is pressed on the first welding portion W1, the external device is easily crushed by the first welding portion W1. In this embodiment, with the groove 324 provided, a gap between the first outer surface 322 and the bottom wall of the groove 324 is formed, so that the first outer surface 322 can be configured to support the external device to separate the external device from the first welding portion W1, reducing the risk of the external device being crushed.

For example, the external device may be an electrolyte injection device, an air extraction device, a welding device, or other devices used for the battery cell 7.

In some embodiments, the connecting portion 32 is provided with a first through hole 323, where the first through hole 323 is configured to communicate the space on the side of the connecting portion 32 facing away from the electrode assembly 10 with the inner space of the housing 20.

The first through hole 323 runs through the connecting portion 32 in the thickness direction X of the connecting portion 32. The first through hole 323 may be provided in one, or may be provided in plurality.

When the connecting portion 32 and the current collecting member 40 are welded, the first through hole 323 can release the welding stress and reduce the risk of the connecting portion 32 being broken.

During forming of the battery cell 7, the first through hole 323 may be used in multiple forming processes. For example, the first through hole 323 may be applied in electrolyte injection process, formation process, or other processes.

Specifically, the first through hole 323 is used for injecting the electrolyte into the inner space of the housing 20. When electrolyte injection is required, an electrolyte injection head of an electrolyte injection device presses against the connecting portion 32, and then the electrolyte injection head injects electrolyte into the housing 20 through the first through hole 323.

During forming of the battery cell 7, gas is generated in the housing 20, and the first through hole 323 may also be used for communicating with an external negative pressure device to extract the gas in the housing 20.

In some embodiments, the axis of the first through hole 323 coincides with the axis of the electrode lead-out hole 221.

In some embodiments, the current collecting member 40 is provided with a second through hole 45. The second through hole 45 is configured to be opposite the first through hole 323, so that the electrolyte can flow into the interior space of the housing 20 through the second through hole 45.

The axial direction of the first through hole 323 is parallel to the axial direction of the second through hole 45. In the axial direction of the first through hole 323, the projection of the first through hole 323 at least partially overlaps with the projection of the second through hole 45. The diameter of the second through hole 45 is not limited in this embodiment, and may be greater than, equal to, or smaller than that of the first through hole 323.

In this embodiment, the second through-hole 45 opposite the first through-hole 323 is provided on the current collecting member 40 to reduce the blocking of the current collecting member 40 to the electrolyte in the electrolyte injection process, so that the electrolyte can flow into the housing 20 smoothly, improving the infiltration efficiency of the electrode assembly 10.

In some embodiments, in the axial direction of the first through hole 323, the projection of the first through hole 323 falls within the projection of the second through hole 45. Based on this embodiment, the current collecting member 40 can be prevented from blocking the first through hole 323, so that the electrolyte can flow into the housing 20 smoothly.

The first through hole 323 and the second through hole 45 are disposed coaxially, where diameter of the second through hole 45 may be larger than that of the first through hole 323.

In some embodiments, the electrode assembly 10 is a winding structure, the electrode assembly 10 has a third through hole 14 at the center of the winding, the third through hole 14 runs through the electrode assembly 10, the third through hole 14 is disposed opposite the first through hole 323 and the second through hole 45, so that the electrolyte can flow into the inside of the electrode assembly 10 through the third through hole 14.

The electrode assembly 10 is manufactured by winding the first electrode plate, the second electrode plate, and the separator on a winding tool, and after the winding is completed, the winding tool is pulled out from the electrode assembly 10. After the winding tool is pulled out, the third through hole 14 is formed in the middle of the electrode assembly 10.

The axial direction of the third through hole 14 may be parallel to the axial direction of the first through hole 323. The axis of the third through hole 14 coincides with the central axis A of the electrode assembly 10. The third through hole 14 runs through the first tab 11, the main body 12, and the second tab 13.

In the electrolyte injection process, the electrolyte can flow into the third through hole 14 through the first through hole 323 and the second through hole 45, and the electrolyte flowing into the third through hole 14 can infiltrate the electrode assembly 10 from the inside, thereby improving the infiltration efficiency of the electrode assembly 10.

In some embodiments, in the axial direction of the third through hole 14, the projection of the second through hole 45 falls within the projection of the third through hole 14. In this way, the shielding of the first tab 11 to the second through hole 45 can be reduced, so that the electrolyte can flow into the third through hole 14 smoothly.

In some embodiments, the first through hole 323, the second through hole 45, and the third through hole 14 are arranged coaxially. The diameter of the third through hole 14 may be greater than or equal to that of the second through hole 45.

In some embodiments, the first through hole 323 extends from the bottom wall of the groove 324 to the first inner surface 321 to run through the connecting portion 32. During electrolyte injection, the electrolyte injection head presses against the first outer surface 322, so that the first outer surface 322 can support the electrolyte injection head and cooperate with the electrolyte injection head to achieve sealing, reducing the risk of electrolyte leakage to the outside of the battery cell 7.

FIG. 12 is a schematic structural diagram of an electrode assembly and a current collecting member of a battery cell according to some other embodiments of this application.

As shown in FIG. 12, the third welding portion W3 is provided in plurality, and the plurality of third welding portions W3 are disposed at intervals in a circumferential direction Y of the first tab 11.

The third welding portion W3 may be a rectilinear structure extending in the radial direction of the electrode assembly 10, or may be a V-shaped structure, and of course, may be in other structures.

The plurality of third welding portions W3 can enlarge the current flow area, improve the uniformity of the current density of the first electrode plate, reduce the internal resistance, and improve the current capacity.

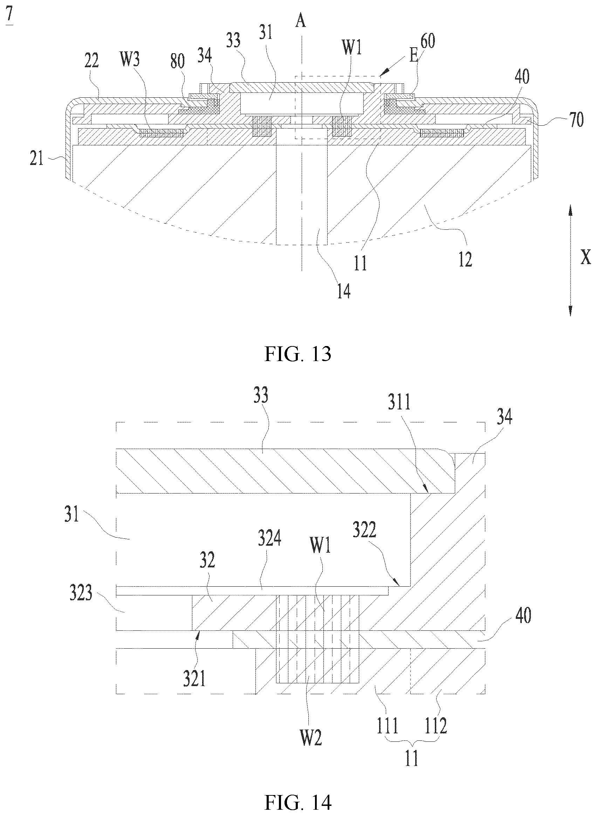

FIG. 13 is a partial schematic cross-sectional view of a battery cell according to some other embodiments of this application; and FIG. 14 is an enlarged schematic diagram at block E in FIG. 13.

As shown in FIG. 13 and FIG. 14, in some embodiments, the first portion 111 is welded to the current collecting member 40 to form a second welding portion W2.

The second welding portion W2 can reduce the contact resistance between the current collecting member 40 and the first tab 11, improving the current capacity. The second welding portion W2 is close to the connecting portion 32, which can reduce the conductive path between the connecting portion 32 and the second welding portion W2, thereby reducing the resistance and improving the current capacity.

In some embodiments, the first welding portion W1 and the second welding portion W2 are integrally connected. The current on the first tab 11 can be conducted to the electrode terminal 30 through the second welding portion W2 and the first welding portion W1, so as to shorten the conductive path, reduce the resistance, and improve the current capacity.

In some embodiments, during welding of the connecting portion 32 and the current collecting member 40, the current collecting member 40 may be melted through first, and the first welding portion W1 and the second welding portion W2 are simultaneously formed.

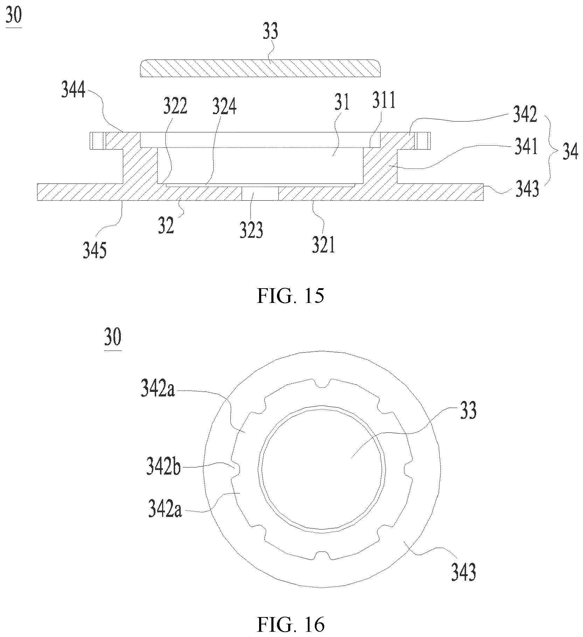

FIG. 15 is a schematic exploded view of an electrode terminal of a battery cell according to some embodiments of this application; and FIG. 16 is a schematic top view of an electrode terminal of a battery cell according to some embodiments of this application.

Refer to FIG. 13 to FIG. 16 together. In some embodiments, the housing 20 includes a cylinder 21 and a cover 22 connected to the cylinder 21. The cylinder 21 is disposed around the periphery of the electrode assembly 10. The cover 22 is provided with an electrode lead-out hole 221. The electrode terminal 30 is mounted in the electrode lead-out hole 221. The electrode terminal 30 includes a terminal body 34. The terminal body 34 includes a columnar portion 341, a first restraint member 342, and a second restraint member 343, at least part of the columnar portion 341 is located in the electrode lead-out hole 221, the first concave portion 31 is disposed in the columnar portion 341, the first restraint member 342 and the second restraint member 343 are both connected to and protrude from the outer lateral wall of the columnar portion 341, and the first restraint member 342 and the second restraint member 343 are disposed on the outside and inside of the cover 22 respectively and together are configured to clamp part of the cover 22.

The first restraint member 342 being disposed on the outside of the cover 22 means that the first restraint member 342 is disposed on the side of the cover 22 facing away from the electrode assembly 10; and the second restraint member 343 being disposed on the inside of the cover 22 means that the second restraint member 343 is disposed on the side of the cover 22 facing the electrode assembly 10.

In the thickness direction of the cover 22, at least part of the first restraint member 342 overlaps with the cover 22, and at least part of the second restraint member 343 overlaps with the cover 22. The columnar portion 341 runs through the electrode lead-out hole 221 to connect the first restraint member 342 and the second restraint member 343 that are located on two sides of the cover 22 respectively.

The first restraint member 342 and the second restraint member 343 clamp the part of the cover 22 from two sides, so as to fix the terminal body 34 to the cover 22. The first restraint member 342 and the second restraint member 343 may directly clamp the cover 22, or may indirectly clamp the cover 22 through other components.

Optionally, the columnar portion 341 is cylindrical. The first restraint member 342 and the second restraint member 343 are both annular structures surrounding the columnar portion 341.

In some embodiments, the battery cell 7 further includes a first insulating member 60 and a second insulating member 70, at least part of the first insulating member 60 is disposed between the first restraint member 342 and the cover 22, and at least part of the second insulating member 70 is disposed between the second restraint member 343 and the cover 22. The first insulating member 60 and the second insulating member 70 are used for insulating the terminal body 34 from the cover 22.

The first insulating member 60 and the second insulating member 70 are both annular structures disposed around the columnar portion 341.

The first insulating member 60 can insulate the first restraint member 342 from the cover 22, and the second insulating member 70 can insulate the second restraint member 343 from the cover 22.

In some embodiments, one of the first insulating member 60 and the second insulating member 70 separates the columnar portion 341 from the cover 22. For example, part of the first insulating member 60 extends into the electrode lead-out hole 221 to separate the hole wall of the electrode lead-out hole 221 from the columnar portion 341.

In some embodiments, the first insulating member 60 and the second insulating member 70 are integrally formed structures. Alternatively, in some other embodiments, the first insulating member 60 and the second insulating member 70 are provided separately and abut against each other.

In some embodiments, one of the first insulating member 60 and the second insulating member 70 is configured to seal the electrode lead-out hole 221. In some examples, the first restraint member 342 and the cover 22 press the first insulating member 60, and the first insulating member 60 compresses and seals the electrode lead-out hole 221 from the outside. In some other examples, the second restraint member 343 and the cover 22 press the second insulating member 70, and the second insulating member 70 compresses and seals the electrode lead-out hole 221 from the inside.

In some embodiments, the battery cell 7 further includes a sealing ring 80, where the sealing ring 80 is sleeved on the columnar portion 341 and configured to seal the electrode lead-out hole 221. Optionally, part of the sealing ring 80 extends into the electrode lead-out hole 221 to separate the hole wall of the electrode lead-out hole 221 from the columnar portion 341.

In some embodiments, the periphery of the first restraint member 342 is provided with a plurality of protruding structures 342a, and the plurality of protruding structures 342a are disposed at intervals in the circumferential direction of the columnar portion 341.

Optionally, the plurality of protruding structures 342a may be disposed at equal intervals in the circumferential direction of the columnar portion 341.

The first restraint member 342 is a flanging structure formed by turning the end of the terminal body 34 outward that faces away from the electrode assembly 10.

Before the terminal body 34 is assembled into the housing 20, the first restraint member 342 of the terminal body 34 is generally a cylindrical structure and located at the upper end of the columnar portion 341, and the outer lateral wall of the first restraint member 342 is flush with the outer lateral wall of the columnar portion 341. During assembly of the terminal body 34 and the housing 20, the first restraint member 342 threads through the electrode lead-out hole 221, and the first restraint member 342 is squeezed, so that the first restraint member 342 is folded outwards, and the terminal body 34 is riveted to the cover 22.

Before folding the first restraint member 342, the upper end of the first restraint member 342 is provided with a plurality of groove structures 342b disposed at intervals. After folding the first restraint member 342, a plurality of protruding structures 342a disposed at intervals in the circumferential direction of the columnar portion 341 are formed, where the groove structure 342b is formed between the adjacent protruding structure 342a. In this embodiment, the groove structure 342b and the protruding structure 342a are provided to reduce the difficulty of folding the first restraint member 342 and reduce the stress concentration on the first restraint member 342.

In some embodiments, the second restraint member 343 is a restraint structure formed by pressing the end of the terminal body 34 facing the electrode assembly 10 so that the end of the terminal body 34 facing the electrode assembly 10 extends outward. During assembly of the cover 22 and the terminal body 34, the external device can squeeze an end of the terminal body 34 facing the electrode assembly 10, and the end of the terminal body 34 facing the electrode assembly 10 extends outward under the action of pressure to form the protruding second restraint member 343.

In some embodiments, the terminal body 34 has a second outer surface 344, and the first concave portion 31 is recessed from the second outer surface 344 in a direction facing the electrode assembly 10 to the first outer surface 322 of the connecting portion 32.

The terminal body 34 has a second outer surface 344 and a second inner surface 345 that are oppositely disposed. The second inner surface 345 faces the electrode assembly 10, and the second outer surface 344 faces away from the electrode assembly 10. The first concave portion 31 is recessed from the second outer surface 344 in the direction facing the electrode assembly 10 to the first outer surface 322 of the connecting portion 32.

In some embodiments, the electrode terminal 30 further includes a sealing plate 33, where the sealing plate 33 is connected to the terminal body 34 and seals the opening of the first concave portion 31.

The sealing plate 33 may be entirely located outside the first concave portion 31, or may be partially accommodated in the first concave portion 31, provided that the sealing plate 33 can seal the opening of the first concave portion 31.

The sealing plate 33 can protect the connecting portion 32 from the outside, reducing external impurities entering the first concave portion 31, reducing the risk of the connecting portion 32 being damaged by external impurities, and improving the sealing performance of the battery cell 7.

In addition, the sealing plate 33 can also function to seal the first through hole 323. After the battery cell 7 is formed, the sealing plate 33 can reduce the risk of electrolyte leakage through the first through hole 323 and the first concave portion 31 and improve the sealing performance.

In some embodiments, a side wall of the first concave portion 31 is provided with a stepped surface 311, at least part of the sealing plate 33 is accommodated in the first concave portion 31, and the stepped surface 311 is configured to support the sealing plate 33.

The first concave portion 31 is a stepped concave portion with the outer part larger than the inner part.

During assembly of the sealing plate 33, the stepped surface 311 can support the sealing plate 33 and position the sealing plate 33, thereby simplifying the assembly process. At least part of the sealing plate 33 is accommodated in the first concave portion 31, so that the overall dimension of the electrode terminal 30 can be reduced, the space occupied by the electrode terminal 30 can be reduced, and the energy density can be improved.

In some embodiments, the sealing plate 33 is welded to the side wall of the first concave portion 31 to seal the opening of the first concave portion 31.

In some embodiments, a gap is provided between the sealing plate 33 and the connecting portion 32, and the gap is used for avoiding the first welding portion W1.

The surface of the first welding portion W1 is uneven. Under the condition that the sealing plate 33 is pressed against the first welding portion W1, the sealing plate 33 vibrates during assembly, affecting the sealing effect. In this embodiment, a gap is provided between the sealing plate 33 and the connecting portion 32, so as to avoid the sealing plate 33 from the first welding portion W1, prevent direct contact between the sealing plate 33 and the first welding portion W1, reduce the shaking of sealing plate 33 in the assembly process, and ensure the sealing effect.

In some examples, the first concave portion 31 has a stepped structure, so that the sealing plate 33 abuts against the stepped surface 311 to form a gap between the sealing plate 33 and the connecting portion 32. In some other examples, the connecting portion 32 may alternatively be disposed in a stepped structure, so that the sealing plate 33 can abut against the connecting portion 32, and the groove 324 on the connecting portion 32 forms a gap between the sealing plate 33 and the connecting portion 32.

In some embodiments, the sealing plate 33 may be configured to be welded to the busbar of the battery. In the battery, the busbar may connect the sealing plate 33 of one battery cell 7 and the cover 22 of another battery cell 7 to connect the two battery cells 7 in series.

In the battery, at least part of the sealing plate 33 protrudes from the second outer surface 344 of the terminal body 34.

When it is necessary to weld the busbar and the sealing plate 33, the busbar is fitted to an upper surface of the sealing plate 33 (that is, the outer surface of the sealing plate 33 facing away from the connecting portion 32) first, and the busbar is then welded to the sealing plate 33.

At least part of the sealing plate 33 protrudes from the second outer surface 344, so as to prevent the second outer surface 344 from obstructing fitting of the sealing plate 33 and the busbar, ensuring the tight fit between the busbar and the sealing plate 33.

In some embodiments, the connecting portion 32 is disposed at an end of the terminal body 34 facing the electrode assembly 10, and the first inner surface 321 of the connecting portion 32 is flush with the second inner surface 345.

The second inner surface 345 is a surface of the terminal body 34 facing the electrode assembly 10. The first inner surface 321 of the connecting portion 32 constitutes part of the second inner surface 345. In this way, the terminal body 34 may be fitted to the current collecting member 40 with a flat-plate structure. In this embodiment, provided that the current collecting member 40 is fitted to the second inner surface 345, the connecting portion 32 and the current collecting member 40 can be bonded together, so as to facilitate the welding of the connecting portion 32 and the current collecting member 40.

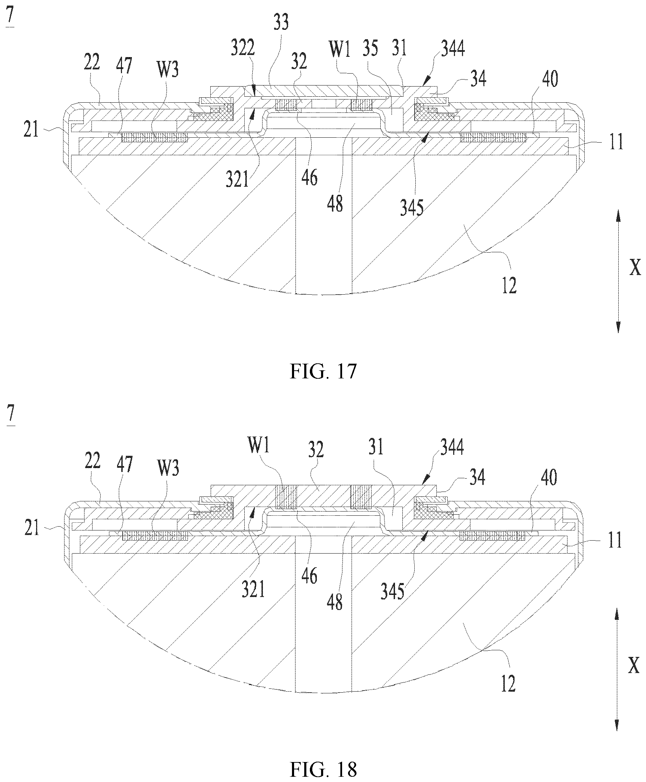

FIG. 17 is a partial schematic cross-sectional view of a battery cell according to some other embodiments of this application.

As shown in FIG. 17, in some embodiments, the terminal body 34 has a second outer surface 344 and a second inner surface 345 that are oppositely disposed, and the first concave portion 31 is recessed from the second outer surface 344 to the first outer surface 322 of connecting portion 32 in the direction facing electrode assembly 10. The terminal body 34 further includes a third concave portion 35, where the third concave portion 35 is recessed from the second inner surface 345 to the first inner surface 321 of the connecting portion 32 in a direction facing away from the electrode assembly 10.

In this embodiment of this application, both the first concave portion 31 and the third concave portion 35 are provided to reduce the thickness of the connecting portion 32, which can reduce the requirement for the depth of the first concave portion 31 and simplify the forming process. With the third concave portion 35 disposed, the internal space of the battery cell 7 can be enlarged, and the energy density can be increased.

In some embodiments, the current collecting member 40 includes a terminal connecting portion 46 and a tab connecting portion 47 surrounding the terminal connecting portion 46, the terminal connecting portion 46 protrudes with respect to the tab connecting portion 47 and extends into the third concave portion 35, so that the top of the terminal connecting portion 46 abuts against the first inner surface 321 of the connecting portion 32.

The tab connecting portion 47 is located between the cover 22 and the first tab 11, and welded to the second portion 112 to form the third welding portion W3. Optionally, the tab connecting portion 47 may be an annular flat-plate structure.

In some embodiments, the current collecting member 40 is provided with a fourth concave portion 48 at a position corresponding to the terminal connecting portion 46, where the fourth concave portion 48 is recessed with respect to the surface of the tab connecting portion 47 facing the first tab 11. The fourth concave portion 48 can reduce the space occupied by the terminal connecting portion 46 and reduce the weight of the current collecting member 40. For example, the terminal connecting portion 46 and the fourth concave portion 48 are formed by stamping the current collecting member 40.

FIG. 18 is a partial schematic cross-sectional view of a battery cell according to still some other embodiments of this application.

As shown in FIG. 18, in some embodiments, the terminal body 34 has a second outer surface 344 and a second inner surface 345 that are oppositely disposed, and the first concave portion 31 is recessed from the second inner surface 345 to the first inner surface 321 of the connecting portion 32 in the direction facing away from the electrode assembly 10.

In this embodiment, the first concave portion 31 is disposed inside the terminal body 34, which can ensure the flatness and area of the second outer surface 344, and facilitate the connection between the terminal body 34 and an external busbar. Providing the first concave portion 31 inside the terminal body 34 can also enlarge the internal space of the battery cell 7 and increase the energy density.

In some embodiments, the current collecting member 40 includes a terminal connecting portion 46 and a tab connecting portion 47 surrounding the terminal connecting portion 46, the terminal connecting portion 46 protrudes with respect to the tab connecting portion 47 and extends into the first concave portion 31, so that the top of the terminal connecting portion 46 abuts against the first inner surface 321 of the connecting portion 32.

The tab connecting portion 47 is located between the cover 22 and the first tab 11, and welded to the second portion 112 to form the third welding portion W3. Optionally, the tab connecting portion 47 may be an annular flat-plate structure.

In some embodiments, the current collecting member 40 is provided with a fourth concave portion 48 at a position corresponding to the terminal connecting portion 46, where the fourth concave portion 48 is recessed with respect to the surface of the tab connecting portion 47 facing the first tab 11. The fourth concave portion 48 can reduce the space occupied by the terminal connecting portion 46 and reduce the weight of the current collecting member 40. For example, the terminal connecting portion 46 and the fourth concave portion 48 are formed by stamping the current collecting member 40.

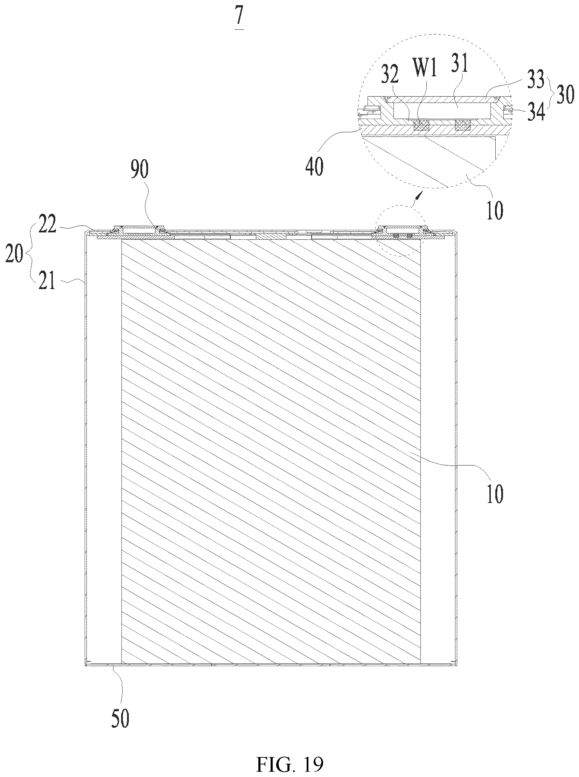

FIG. 19 is a schematic cross-sectional view of a battery cell according to some other embodiments of this application.

As shown in FIG. 19, in some embodiments, the battery cell 7 may be a prismatic battery cell.

In some embodiments, the housing 20 includes a cylinder 21 and a cover 22 formed integrally, where the cylinder 21 is disposed around the periphery of the electrode assembly 10. For example, the cylinder 21 may be a square cylinder.

The cylinder 21 has an opening at an end facing away from the cover 22, and the cover plate 50 covers the opening of the cylinder 21 to seal the opening of the cylinder 21. For example, the cover plate 50 is welded to the cylinder 21.

In some embodiments, the battery cell further includes a first electrode terminal 30 and a second electrode terminal 90 that have opposite polarities, where the first electrode terminal 30 is configured to be electrically connected to a first tab of the electrode assembly 10, and the second electrode terminal 90 is configured to be electrically connected to a second tab of the electrode assembly 10.

In some embodiments, the first electrode terminal 30 and the second electrode terminal 90 are mounted in the cover 22.

In the battery, a busbar connects electrode terminals of a plurality of battery cells, so as to connect the plurality of battery cells in series, in parallel, or in series-parallel. Both the first electrode terminal 30 and the second electrode terminal 90 can be configured to be connected to the busbar.

When the battery is subjected to an external impact, the busbar pulls the cover 22 through the first electrode terminal 30 and the second electrode terminal 90, so that the joint between the cover 22 and the cylinder 21 is subjected to the action of force. Under the condition that the cover 22 and the cylinder 21 are separate structures, for example, the cover 22 and the cylinder 21 are connected by welding, the joint between the cover 22 and the cylinder 21 may fail under the action of force. In this embodiment of this application, the cover 22 and the cylinder 21 are integrated so as to enhance the strength of the joint between the cover 22 and the cylinder 21 and reducing the risk of failure in the joint between the cover 22 and the cylinder 21.

In some embodiments, the housing 20 is neither electrically connected to a positive electrode of the electrode assembly, nor is electrically connected to a negative electrode of the electrode assembly. In other words, the housing 20 is not charged.

In some embodiments, the first tab and second tab of the electrode assembly 10 are located on a same side of the electrode assembly facing the cover 22.

Some embodiments of this application further provide a battery, including the battery cell according to any one of the foregoing embodiments.

Some embodiments of this application further provide an electric apparatus, including the battery cell according to any one of the foregoing embodiments, where the battery cell is configured to provide electric energy. The electric apparatus may be any one of the foregoing devices or systems using a battery cell.

Refer to FIG. 4 to FIG. 6. Some embodiments of this application provide a cylindrical battery cell 7, including an electrode assembly 10, a housing 20, an electrode terminal 30, a current collecting member 40, and a cover plate 50.

The housing 20 includes a cylinder 21 and a cover 22 that are integrally formed. The cylinder 21 is disposed around the periphery of the electrode assembly 10. The cover 22 is provided with an electrode lead-out hole 221. The electrode terminal 30 is mounted in the electrode lead-out hole 221. The cylinder 21 has an opening at an end facing away from the cover 22, and the cover plate 50 covers the opening of the cylinder 21 to seal the opening of the cylinder 21.

The electrode assembly 10 includes a main body 12, a first tab 11, and a second tab 13, where the first tab 11 and the second tab 13 protrude from the main body 12. The first tab 11 is disposed at an end of the electrode assembly 10 facing the electrode terminal 30, and the second tab 13 is disposed at an end of the electrode assembly 10 facing away from the electrode terminal 30.

The electrode terminal 30 includes a terminal body 34 and a sealing plate 33. The terminal body 34 includes a first concave portion 31 and a connecting portion 32 located at the bottom of the first concave portion 31. The sealing plate 33 is connected to the terminal body 34 and seals the opening of the first concave portion 31.

The current collecting member 40 is welded to the first tab 11 and the connecting portion 32 to electrically connect the first tab 11 and the connecting portion 32.

It should be noted that, without conflict, the embodiments and features in the embodiments in this application may be combined with each other.

In conclusion, it should be noted that the foregoing embodiments are merely intended for describing the technical solutions of this application, but not for limiting this application. Although this application is described in detail with reference to the foregoing embodiments, a person of ordinary skills in the art should understand that they may still make modifications to the technical solutions described in the foregoing embodiments or make equivalent replacements to some technical features thereof, without departing from the spirit and scope of the technical solutions of the embodiments of this application.

## Claims

1. A battery cell, comprising:
an electrode assembly, comprising a first tab;
a housing, configured to accommodate the electrode assembly;
an electrode terminal, disposed on the housing, the electrode terminal comprising a first concave portion and a connecting portion at the bottom of the first concave portion; and
a current collecting member, connected to the first tab and welded to the connecting portion.

2. The battery cell according to claim 1, wherein the current collecting member is welded to the connecting portion to form a first welding portion, and in a thickness direction of the connecting portion, the first welding portion extends from a side of the connecting portion facing away from the current collecting member at least to the inside of the current collecting member.

3. The battery cell according to claim 2, wherein in the thickness direction of the connecting portion, the first welding portion does not protrude beyond a surface of the current collecting member facing away from the connecting portion.

4. The battery cell according to claim 2 or 3, wherein the housing comprises a cylinder and a cover connected to the cylinder, the cylinder is disposed around the periphery of the electrode assembly, the cover is provided with an electrode lead-out hole, and the electrode terminal is mounted in the electrode lead-out hole;
the first welding portion and the cover are both annular, outer diameter of the cover is D₀, and inner diameter of the first welding portion is D₁; and
D₁ and D₀ satisfy 0.1≤D₁/D₀≤0.6.

5. The battery cell according to claim 4, wherein the first welding portion is a non-closed structure, and a central angle of the first welding portion ranges from 180° to 330°.

6. The battery cell according to claim 4, wherein the first welding portion is a closed structure.

7. The battery cell according to any one of claims 4 to 6, wherein 0.2≤D₁/D₀≤0.4.

8. The battery cell according to any one of claims 4 to 7, wherein D₁ ranges from 5 mm to 14 mm.

9. The battery cell according to any one of claims 4 to 8, wherein the cover and the cylinder are integrally formed.

10. The battery cell according to any one of claims 2 to 9, wherein in the thickness direction of the connecting portion, dimension of the first welding portion is h, and thickness of a region of the connecting portion for welding with the current collecting member is d₀; and
d₀ and h satisfy 1<h/d₀≤1.5.

11. The battery cell according to claim 10, wherein thickness of a region of the current collecting member for welding with the connecting portion is di, and d₀ and d₁ satisfy 0.5≤d₁/d₀≤1.2.

12. The battery cell according to claim 10 or 11, wherein d₀ ranges from 0.4 mm to 1.2 mm.

13. The battery cell according to any one of claims 1 to 12, wherein at least part of the first tab is located on a side of the current collecting member facing away from the electrode terminal and supports the current collecting member.

14. The battery cell according to claim 13, wherein a first portion of the first tab is located on a side of the connecting portion facing away from the first concave portion, and is configured to support part of the current collecting member that is opposite the connecting portion.

15. The battery cell according to claim 14, wherein the first portion is welded to the current collecting member to form a second welding portion.

16. The battery cell according to any one of claims 13 to 15, wherein a second portion of the first tab encloses the periphery of the first portion, and is configured to support a region of the current collecting member that is not opposite the connecting portion.

17. The battery cell according to claim 16, wherein the second portion is welded to the current collecting member to form a third welding portion.

18. The battery cell according to claim 17, wherein the current collecting member has a convex portion on a side facing the first tab, and the convex portion is welded to the second portion to form the third welding portion.

19. The battery cell according to claim 17 or 18, wherein the first tab is disposed around the central axis of the electrode assembly, and a cross section of the first tab perpendicular to the central axis is annular; and
outer radius of the first tab is R, minimum distance from the third welding portion to the central axis in the radial direction of the first tab is D₂, and R and D₂ satisfy 0.2≤D₂/R≤0.8.

20. The battery cell according to claim 19, wherein D₂ and R satisfy 0.2≤D₂/D₂≤0.5.

21. The battery cell according to claim 19 or 20, wherein D₂ ranges from 3.5 mm to 10 mm.

22. The battery cell according to any one of claims 13 to 21, wherein diameter of the current collecting member is D₃, diameter of the first tab is D₄, and D₃ is less than D4.

23. The battery cell according to claim 22, wherein D₃ and D₄ satisfy 0.75≤D₃/D₄≤0.97.

24. The battery cell according to claim 22 or 23, wherein D₃ ranges from 35 mm to 44 mm.

25. The battery cell according to any one of claims 2 to 12, wherein the connecting portion is provided with a groove recessed from a first outer surface of the connecting portion in a direction facing the electrode assembly, and the first welding portion extends from the bottom wall of the groove at least to the inside of the current collecting member.

26. The battery cell according to any one of claims 1 to 25, wherein
the housing comprises a cylinder and a cover connected to the cylinder, the cylinder is provided around the periphery of the electrode assembly, the cover is provided with an electrode lead-out hole, and the electrode terminal is mounted in the electrode lead-out hole; and
the electrode terminal comprises a terminal body, the terminal body comprises a columnar portion, a first restraint member, and a second restraint member, at least part of the columnar portion is located in the electrode lead-out hole, the first concave portion is disposed in the columnar portion, the first restraint member and the second restraint member are both connected to and protrude from the outer lateral wall of the columnar portion, and the first restraint member and the second restraint member are disposed on the outside and inside of the cover respectively and together are configured to clamp part of the cover.

27. The battery cell according to claim 26, wherein the terminal body has a second outer surface, and the first concave portion is recessed from the second outer surface in the direction facing the electrode assembly to the first outer surface of the connecting portion.

28. The battery cell according to claim 26 or 27, wherein the electrode terminal further comprises a sealing plate, and the sealing plate is connected to the terminal body and seals an opening of the first concave portion.

29. The battery cell according to any one of claims 1 to 28, wherein the electrode assembly further comprises a second tab with a polarity opposite to that of the first tab, and the second tab is disposed around the central axis of the electrode assembly; and
the first tab is disposed at an end of the electrode assembly facing the electrode terminal, the second tab is disposed at an end of the electrode assembly facing away from the electrode terminal, and the second tab is electrically connected to the housing.

30. The battery cell according to claim 29, wherein the second tab is a negative electrode tab, and a substrate material of the housing is steel.

31. The battery cell according to any one of claims 1 to 30, wherein the housing has an opening at an end facing away from the electrode terminal, and the battery cell further comprises a cover plate for sealing the opening.

32. A battery, comprising the battery cell according to any one of claims 1 to 31.

33. An electric apparatus, comprising the battery according to claim 32, wherein the battery is configured to supply electrical energy.
